# EUROPEAN PATENT SPECIFICATION

(11) **EP 4 466 942 B1**
(45) Date of publication and mention of the grant of the patent: **27.05.2026**
(21) Application number: 23711213.1
(22) Date of filing: 10.02.2023
(51) Int. Cl.: H04W 76/27, H04W 88/08

(54) **MANAGING RADIO CONFIGURATIONS FOR A USER EQUIPMENT**
VERWALTUNG VON FUNKKONFIGURATIONEN FÜR EIN BENUTZERGERÄT
GESTION DE CONFIGURATIONS RADIO POUR UN ÉQUIPEMENT UTILISATEUR

(30) Priority: 11.02.2022 US 202263267922 P
(43) Date of publication of application: 27.11.2024
(73) Proprietor: GOOGLE LLC, Mountain View CA 94043 (US)
(72) Inventor: WU, Chih-Hsiang, Mountain View, CA 94043 (US)
(74) Representative: Marks & Clerk GST
(86) International application number: PCT/US2023/012784
(87) International publication number: WO 2023/154445

(56) References cited:
- US-A1- 2021 410 180
- EMAIL DISCUSSION RAPPORTEUR (LENOVO): "Report from email discussion [POST112-e][550][SDT] Further details of CG aspects", vol. RAN WG2, no. E-meeting; 20210125 - 20210205, 14 January 2021 (2021-01-14), XP051972755, Retrieved from the Internet <URL:https://ftp.3gpp.org/tsg_ran/WG2_RL2/TSGR2_113-e/Docs/R2-2100930.zip> [retrieved on 20210114]
- HUAWEI: "(TP to TS 38.401 BL CR) Support of CG-SDT", vol. RAN WG3, no. E-meeting; 20220117 - 20220126, 7 January 2022 (2022-01-07), XP052098949, Retrieved from the Internet <URL:https://ftp.3gpp.org/tsg_ran/WG3_Iu/TSGR3_114bis-e/Docs/R3-220426.zip> [retrieved on 20220107]

## Description

### FIELD OF THE DISCLOSURE

This disclosure relates generally to wireless communications and, more particularly, to communication of uplink and/or downlink data between a user equipment (UE) and a radio access network (RAN) when the UE operates in an inactive or idle state associated with a protocol for controlling radio resources.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Generally, a base station operating a cellular radio access network (RAN) communicates with a user equipment (UE) using a certain radio access technology (RAT) and multiple layers of a protocol stack. For example, the physical layer (PHY) of a RAT provides transport channels to the Medium Access Control (MAC) sublayer, which in turn provides logical channels to the Radio Link Control (RLC) sublayer, and the RLC sublayer in turn provides data transfer services to the Packet Data Convergence Protocol (PDCP) sublayer. The Radio Resource Control (RRC) sublayer is disposed above the PDCP sublayer.

The RRC sublayer defines an RRC_IDLE state, in which a UE does not have an active radio connection with a base station; an RRC_CONNECTED state, in which the UE has an active radio connection with the base station; and an RRC_INACTIVE that allows a UE to more quickly transition back to the RRC_CONNECTED state using RAN-level base station coordination and RAN-paging procedures. In some cases, the UE in the RRC_INACTIVE state has only one, relatively small packet to transmit. For situations such as these, 3GPP is discussing a Small Data Transmission (SDT) procedure to enable the 5G NR (New Radio), a wireless communication standard, to support data transmission for the UE operating in the RRC_INACTIVE state (i.e., without requiring that the UE transition to the RRC_CONNECTED state).

SDT is enabled on a radio bearer basis and is initiated by the UE only if (1) the amount of uplink (UL) data awaiting transmission (across all radio bearers for which SDT is enabled) is below a configured threshold, (2) the downlink (DL) reference signal power (RSRP) is above a configured threshold, and (3) a valid SDT resource is available. An SDT procedure can be initiated by the UE with either a transmission over a random access channel (RACH), i.e., random access SDT (RA-SDT) or over Type 1 configured grant (CG) resources, i.e., CG-SDT. For the RA-SDT, the network configures 2-step and/or 4-step random access resources for SDT. In the RA-SDT, the UE can transmit an initial transmission including data in a message 3 (Msg3) of a 4-step random access procedure or in payload of a message A (MsgA) of a 2-step random access procedure. The network can then schedule subsequent uplink and/or downlink transmissions using dynamic uplink grants and downlink assignments, respectively, after the completion of the random access procedure.

The CG-SDT can only be initiated with valid UL timing alignment. The UE maintains the UL time alignment based on a network-configured, SDT-specific time alignment timer and DL RSRP of a configured number of highest ranked synchronization signal blocks (SSBs). Upon expiry of the SDT-specific time alignment timer, the CG resources are released. Upon initiating the CG-SDT, the UE transmits an initial transmission including data on a CG occasion using a CG configuration, and the network can schedule subsequent UL transmissions using dynamic grants on future CG resource occasions. During the CG-SDT, the DL transmissions are scheduled using dynamic assignments. The UE can initiate subsequent UL transmission only after receiving, from the network, confirmation of the initial UL transmission.

However, it is not clear how base stations of a RAN, including distributed base stations that include a central unit (CU) and at least one distributed unit (DU), manage SDT configuration(s) for a UE during state transitions (e.g., from connected to inactive or inactive to connected) and/or after completing SDT operation. Failure to properly manage SDT configurations in such scenarios can result in data communication latency and/or other network inefficiencies.
"Report from email discussion [POST112-e][550][SDT] Further details of CG aspects" (a 3GPP draft document with reference R2-2100930) may be relevant.
"(TP to TS 38.401 BL CR) Support of CG-SDT" (a 3GPP draft document with reference R3-220426) may also be relevant.

### SUMMARY

In various implementations of this disclosure, a RAN node (e.g., a base station, or a CU or DU of a distributed base station) manages SDT configuration information for a UE according to the claims.

### BRIEF DESCRIPTION OF THE DRAWINGS

Fig. 1A is a block diagram of an example wireless communication system in which a user device and a base station of this disclosure can implement the techniques of this disclosure, e.g., for reducing latency in data communication;
Fig. 1B is a block diagram of an example base station in which a central unit (CU) and a distributed unit (DU) that can operate in the system of Fig. 1A;
Fig. 2A is a block diagram of an example protocol stack according to which the UE of Fig. 1A communicates with base stations;
Fig. 2B is a block diagram of an example protocol stack according to which the UE of Fig. 1A communicates with a CU and a DU;
Figs. 3-5B illustrate several scenarios in which the devices of Figs. 1A-2B can manage radio configurations for a UE in accordance with the techniques of this disclosure; and
Figs. 6A-9B illustrate several methods, which can be implemented by one or more devices of Figs. 1A-2B, for managing radio configurations for a UE accordance with the techniques of this disclosure.

### DETAILED DESCRIPTION OF THE DRAWINGS

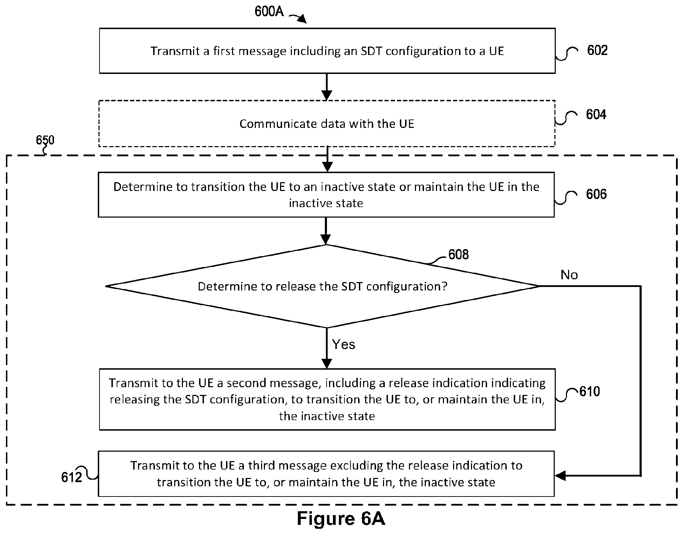

The invention is defined by figures 6A-9B and their corresponding paragraphs in this description. The rest of the disclosure of the description is considered as relevant for understanding the invention. As discussed in more detail below, a user equipment (UE) and/or a network node of a radio access network (RAN) can use the techniques of this disclosure for managing early data communication and transitioning a UE between states of a protocol for controlling radio resources between the UE and the RAN. As used in this disclosure, unless the context clearly indicates a more specific meaning, small data communication can refer to small data transmission (SDT) from the perspective of the network (i.e., SDT in the downlink direction), or SDT from the perspective of the UE (i.e., SDT in the uplink direction).

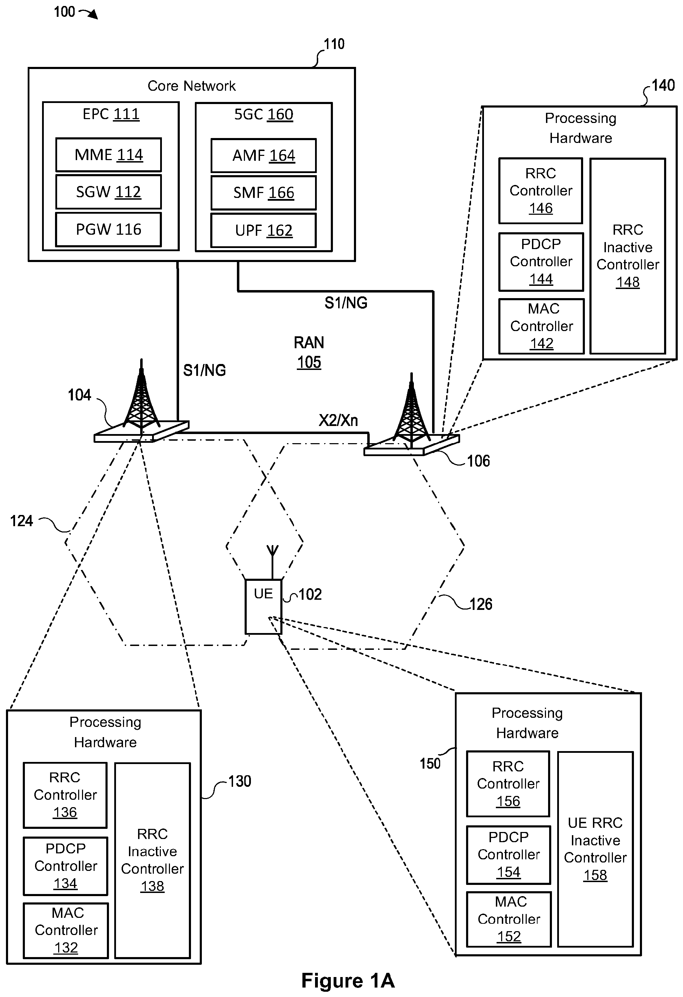

Referring first to Fig. 1A, an example wireless communication system 100 includes a UE 102, a base station (BS) 104, a base station 106, and a core network (CN) 110. The base stations 104 and 106 can operate in a RAN 105 connected to the CN 110. The CN 110 can be implemented as an evolved packet core (EPC) 111 or a fifth generation (5G) core (5GC) 160, for example. The CN 110 can also be implemented as a sixth generation (6G) core in another example.

The base station 104 covers a cell 124, and the base station 106 covers a cell 126. If the base station 104 is a gNB, the cell 124 is an NR cell. If the base station 104 is an ng-eNB, the cell 124 is an evolved universal terrestrial radio access (E-UTRA) cell. Similarly, if the base station 106 is a gNB, the cell 126 is an NR cell, and if the base station 106 is an ng-eNB, the cell 126 is an E-UTRA cell. The cells 124 and 126 can be in the same Radio Access Network Notification Areas (RNA) or different RNAs. In general, the RAN 105 can include any number of base stations, and each of the base stations can cover one, two, three, or any other suitable number of cells. The UE 102 can support at least a 5G NR (or simply, "NR") or E-UTRA air interface to communicate with the base stations 104 and 106. Each of the base stations 104, 106 can connect to the CN 110 via an interface (e.g., S1 or NG interface). The base stations 104 and 106 also can be interconnected via an interface (e.g., X2 or Xn interface) for interconnecting NG RAN nodes.

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE to one or more external packet data networks, e.g., an Internet network and/or an Internet Protocol (IP) Multimedia Subsystem (IMS) network. The 5GC 160 includes a User Plane Function (UPF) 162 and an Access and Mobility Management Function (AMF) 164, and/or Session Management Function (SMF) 166. Generally, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

As illustrated in Fig. 1A, the base station 104 supports a cell 124, and the base station 106 supports a cell 126. The cells 124 and 126 can partially overlap, so that the UE 102 can select, reselect, or hand over from one of the cells 124 and 126 to the other. To directly exchange messages or information, the base station 104 and base station 106 can support an X2 or Xn interface. In general, the CN 110 can connect to any suitable number of base stations supporting NR cells and/or EUTRA cells.

As discussed in detail below, the UE 102 and/or the RAN 105 may utilize the techniques of this disclosure when the radio connection between the UE 102 and the RAN 105 is suspended, e.g., when the UE 102 operates in an inactive or idle state of the protocol for controlling radio resources between the UE 102 and the RAN 105. For clarity, the examples below refer to the RRC_INACTIVE or RRC_IDLE state of the RRC protocol.

As used herein, and unless a more specific meaning is indicated from the context of use, the term "data" or "data packet" can refer to signaling, control-plane information at a protocol layer of controlling radio resources (e.g., RRC), controlling mobility management (MM), or controlling session management (SM), or can refer to non-signaling, non-control-plane information at one or more protocol layers above the layer of the protocol for controlling radio resources (e.g., RRC), above the layer of the protocol for controlling MM, above the layer of the protocol for controlling SM, and/or above the layer of the protocol for controlling quality of service (QoS) flows (e.g., service data adaptation protocol (SDAP)). The data to which the UE and/or the RAN applies the techniques of this disclosure can include, for example, Internet of Things (IoT) data, Ethernet traffic data, Internet traffic data, or a short message service (SMS) message. Further, as discussed below, the UE 102 in some implementations applies these techniques only if the size of the data is below a certain threshold value. It is also understood that, as used herein (and unless the context of its use indicates a more specific meaning), the term "configuration" can refer to a full configuration, or to a subset of parameters of a full configuration (e.g., a "delta" or other partial configuration that can augment an existing configuration without completely replacing the existing configuration).

In the example scenarios discussed below, the UE 102 transitions to the RRC_INACTIVE or RRC_IDLE state, selects a cell of the base station 104, and exchanges data with the base station 104, either via the base station 106 or with the base station 104 directly, without transitioning to the RRC_CONNECTED state. As a more specific example, after the UE 102 determines that data is available for UL transmission in the RRC_INACTIVE or RRC_IDLE state, the UE 102 can apply one or more security functions to a UL data packet, generate a first UL protocol data unit (PDU) including the security-protected packet, include a UL RRC message along with the first UL PDU in a second UL PDU, and transmit the second UL PDU to the RAN 105. The UE 102 includes a UE identity/identifier (ID) for the UE 102 in the UL RRC message. The RAN 105 can identify the UE 102 based on the UE ID. In some implementations, the UE ID can be an inactive Radio Network Temporary Identifier (I-RNTI), a resume ID, or a non-access stratum (NAS) ID. The NAS ID can be an S-Temporary Mobile Subscriber Identity (S-TMSI) or a Global Unique Temporary Identifier (GUTI).

The security function can include an integrity protection and/or encryption function. When integrity protection is enabled, the UE 102 can generate a message authentication code for integrity (MAC-I) to protect integrity of the data. Thus, the UE 102 in this case generates a security-protected packet including the data and the MAC-I. When encryption is enabled, the UE 102 can encrypt the data to obtain an encrypted packet, so that the security-protected packet includes encrypted data. When both integrity protection and encryption are enabled, the UE 102 can generate a MAC-I for protecting integrity of the data and encrypt the data along with the MAC-I to generate an encrypted packet and an encrypted MAC-I. The UE 102 then can transmit the security-protected packet to the RAN 105 while in the RRC_INACTIVE or RRC_IDLE state.

In some implementations, the data is a UL service data unit (SDU) of the packet data convergence protocol (PDCP) or SDAP. The UE 102 applies the security function to the SDU and includes the secured SDU in a first UL PDU (e.g., a UL PDCP PDU). The UE 102 then includes the UL PDCP PDU in a second UL PDU such as a UL MAC PDU, which can be associated with the medium access control (MAC) layer. Thus, the UE 102 in these cases transmits the secured UL PDCP PDU in the UL MAC PDU. In some implementations, the UE 102 can include, in the UL MAC PDU, a UL RRC message. In other implementations, the UE 102 may not include a UL RRC message in the UL MAC PDU. In this case, the UE 102 may not include a UE ID of the UE 102 in the UL MAC PDU not including a UL RRC message. In yet other implementations, the UE 102 can include the UL PDCP PDU in a UL RLC PDU and then include the UL RLC PDU in the UL MAC PDU. In some implementations where the UE 102 includes the UL RRC message in the UL MAC PDU, the UE 102 generates an RRC MAC-I and includes the RRC MAC-I in the UL RRC message. For example, the RRC MAC-I can be a *resumeMAC-I* field, as specified in 3GPP specification 38.331. In other implementations. the UE 102 can obtain the RRC MAC-I from the UL RRC message with an integrity key (e.g., K_{RRCint} key), an integrity protection algorithm, and parameters such as COUNT (e.g., 32-bit, 64-bit or 128-bit value), BEARER (e.g., 5-bit value) and DIRECTION (e.g., 1-bit value).

In other implementations, the data is a UL SDU of the NAS. The UE 102 applies the security function to the SDU and includes the secured SDU in a first UL PDU such as a NAS PDU, which can be associated with the NAS layer. For example, the NAS layer can be an MM sublayer or SM sublayer of 5G, Evolved Packet System (EPS), or 6G. The UE 102 can then include the UL NAS PDU in a second UL PDU such as a UL RRC message. Thus, the UE 102 in these cases transmits the (first) secured UL NAS PDU in the UL RRC message. In some implementations, the UE 102 can include the UL RRC message in a UL MAC PDU and transmit the UL MAC PDU to a base station (e.g., base station 104 or 106) via a cell (e.g., cell 124 or 126). In this case, the UE 102 may not include an RRC MAC-I in the UL RRC message. Alternatively, the UE 102 may include an RRC MAC-I as described above.

In some implementations, the UL RRC message described above can be a common control channel (CCCH) message, an RRC resume request message, or an RRC early data request message. The UL RRC message can include a UE ID of the UE 102 as described above.

More generally, the UE 102 can secure the data using encryption and/or integrity protection, include the secured data as a security-protected packet in the first UL PDU, and transmit the first UL PDU to the RAN 105 in the second UL PDU.

In some scenarios and implementations, the base station 106 can retrieve the UE ID of the UE 102 from the UL RRC message and identify the base station 104 as the destination of the data in the first UL PDU, based on the determined UE ID. In one example implementation, the base station 106 retrieves the first UL PDU from the second UL PDU and transmits the first UL PDU to the base station 104. The base station 104 then retrieves the security-protected packet from the first UL PDU, applies one or two security functions to decrypt the data and/or check the integrity protection, and transmits the data to the CN 110 (e.g., SGW 112, UPF 162, MME 114 or AMF 164) or an edge server. In some implementations, the edge server can operate within the RAN 105. More specifically, the base station 104 derives at least one security key from UE context information of the UE 102. The base station 104 then retrieves the data from the security-protected packet by using the at least one security key and transmits the data to the CN 110 or edge server. When the security-protected packet is an encrypted packet, the base station 104 decrypts the encrypted packet to obtain the data by using the at least one security key (e.g., an encryption and/or decryption key). If the security-protected packet is an integrity-protected packet, the integrity-protected packet may include the data and the MAC-I. The base station 104 can verify whether the MAC-I is valid for the security-protected packet by using the at least one security key (e.g., an integrity key). When the base station 104 confirms that the MAC-I is valid, the base station 104 sends the data to the CN 110 or edge server. However, when the base station 104 determines that the MAC-I is invalid, the base station 104 discards the security-protected packet. Further, if the security-protected packet is both encrypted and integrity-protected, the encrypted and integrity-protected packet may include the encrypted packet along with the encrypted MAC-I. The base station 104 in this case decrypts the encrypted packet and the encrypted MAC-I to obtain the data and the MAC-I. The base station 104 then determines whether the MAC-I is valid for the data. If the base station 104 determines that the MAC-I is valid, the base station 104 retrieves the data and forwards the data to the CN 110 or edge server. However, if the base station 104 determines that the MAC-I is invalid, the base station 104 discards the packet.

In another implementation, the base station 106 retrieves the security-protected packet from the first UL PDU, and performs a retrieve UE context procedure with the base station 104 to obtain UE context information of the UE 102 from the base station 104. The base station 106 then derives at least one security key from the UE context information. Thereafter, the base station 106 retrieves the data from the security-protected packet by using the at least one security key and transmits the data to the CN 110 (e.g., UPF 162) or an edge server. When the security-protected packet is an encrypted packet, the base station 106 decrypts the encrypted packet to obtain the data by using the at least one security key (e.g., an encryption and/or decryption key). If the security-protected packet is an integrity-protected packet, the integrity protected packet may include the data and the MAC-I. The base station 106 can verify whether the MAC-I is valid for the security-protected packet by using the at least one security key (e.g., an integrity key). When the base station 106 confirms that the MAC-I is valid, the base station 106 sends the data to the CN 110. On the other hand, when the base station 106 determines that the MAC-1 is invalid, the base station 106 discards the security-protected packet. Further, if the security-protected packet is both encrypted and integrity-protected, the encrypted and integrity-protected packet may include the encrypted packet along with the encrypted MAC-I. The base station 106 in this case decrypts the encrypted packet and the encrypted MAC-I to obtain the data and the MAC-I. The base station 106 then determines whether the MAC-I is valid for the data. If the base station 106 determines that the MAC-I is valid, the base station 106 retrieves the data and forwards the data to the CN 110. However, if the base station 106 determines that the MAC-I is invalid, the base station 106 discards the packet.

In other scenarios and implementations, the base station 104 can retrieve the UE ID of the UE 102 from the UL RRC message and identify that the base station 104 stores UE context information of the UE 102. Thus, the base station 104 retrieves the security-protected packet from the first UL PDU, retrieves the data from the security-protected packet, and sends the data to the CN 110 or edge server as described above.

Further, the RAN 105 in some implementations and scenarios transmits data in the DL direction to the UE 102 operating in the RRC_INACTIVE or RRC_IDLE state.

In one implementation, when the base station 104 determines that data is available for downlink transmission to the UE 102 currently operating in the RRC_INACTIVE or RRC_IDLE state, the base station 104 can apply at least one security function to the data to generate a security-protected packet, generate a first DL PDU including the security-protected packet, and include the first DL PDU in a second DL PDU. To secure the data, the base station 104 can apply the security function (e.g., integrity protection and/or encryption) to the DL data. More particularly, when integrity protection is enabled, the base station 104 can generate a MAC-I for protecting integrity of the data, so that the security-protected packet includes the DL data and the MAC-I. When encryption is enabled, the base station 104 can encrypt the data to generate an encrypted packet, so that the security-protected packet is an encrypted packet. Further, when both integrity protection and encryption are enabled, the base station 104 can generate a MAC-I for protecting the integrity of the data and encrypt the data along with the MAC-I to generate an encrypted packet and an encrypted MAC-I. The base station 104 in some implementations generates a first DL PDU, such as a DL PDCP PDU, using the security-protected packet, includes the first DL PDU in a second DL PDU associated with the MAC layer for example (e.g., a DL MAC PDU), and transmits the second DL PDU to the UE 102 without first causing the UE 102 to transition from the RRC_INACTIVE or RRC_IDLE state to the RRC_CONNECTED state. In some implementations, the base station 104 includes the DL PDCP PDU in a DL RLC PDU, includes the DL RLC PDU in the DL MAC PDU and transmits the DL MAC PDU to the UE 102 without first causing the UE 102 to transition from the RRC_INACTIVE or RRC_IDLE state to the RRC_CONNECTED state.

In another implementation, the base station 104 transmits the first DL PDU to the base station 106, which then generates a second DL PDU (e.g., a DL MAC PDU) including the first DL PDU and transmits the second DL PDU to the UE 102 without first causing the UE 102 to transition from the RRC_INACTIVE or RRC_IDLE state to the RRC_CONNECTED state. In some implementations, the base station 106 generates a DL RLC PDU that includes the first DL PDU and includes the DL RLC PDU in the second DL PDU. In yet another implementation, the base station 104 includes the first DL PDU in a DL RLC PDU and transmits the DL RLC PDU to the base station 106, which then generates a second DL PDU (e.g., a DL MAC PDU) that includes the DL RLC PDU, and transmits the second DL PDU to the UE 102.

In some implementations, the base station (i.e., the base station 104 or 106) generates a downlink control information (DCI) and a cyclic redundancy check (CRC) scrambled with an ID of the UE 102 to transmit the second DL PDU generated by the base station. In some implementations, the ID of the UE 102 can be a Radio Network Temporary Identifier (RNTI). For example, the RNTI can be a cell RNTI (C-RNTI), a temporary C-RNTI or an inactive C-RNTI. The base station transmits the DCI and scrambled CRC on a physical downlink control channel (PDCCH) to the UE 102 operating in the RRC_INACTIVE or RRC_IDLE state. The base station scrambles the CRC with the ID of the UE 102. In some implementations, the base station may assign the ID of the UE 102 to the UE 102 in a random access response or a message B (MsgB) that the base station transmits in a random access procedure with the UE 102 before transmitting the DCI and scrambled CRC. In other implementations, the base station may assign the ID of the UE 102 to the UE 102 in an RRC message (e.g., RRC release message or an RRC reconfiguration message) that the base station transmits to the UE 102 before transmitting the DCI and scrambled CRC, e.g., while the UE 102 was in the RRC_CONNECTED state.

The UE 102 operating in the RRC_INACTIVE or RRC_IDLE state can receive the DCI and scrambled CRC on the PDCCH, and then confirm that a physical downlink shared channel (PDSCH), including the second DL PDU, is addressed to the UE 102 according to the ID of the UE 102, the DCI, and the scrambled CRC. The UE 102 then can retrieve the data from the security-protected packet. If the security-protected packet is an encrypted packet, the UE 102 can decrypt the encrypted packet using the appropriate decryption function and the security key to obtain the data. If the security-protected packet is the integrity-protected packet including the data and the MAC-I, the UE 102 can determine whether the MAC-I is valid. If the UE 102 confirms that the MAC-I is valid, the UE 102 retrieves the data. If, however, the UE 102 determines that the MAC-I is invalid, the UE 102 discards the packet.If the security-protected packet is both encrypted and integrity-protected, with encrypted data and an encrypted MAC-I, the UE 102 can decrypt the encrypted packet and encrypted MAC-I to obtain the data and the MAC-I. The UE 102 can then verify that the MAC-I is valid for the data. If the UE 102 confirms that the MAC-I is valid, the UE 102 retrieves and processes the data. Otherwise, when the UE 102 determines that the MAC-I is invalid, the UE 102 discards the data.

The base station 104 is equipped with processing hardware 130 that can include one or more general-purpose processors (e.g., CPUs) and a non-transitory computer-readable memory storing instructions that the one or more general-purpose processors execute. Additionally or alternatively, the processing hardware 130 can include special-purpose processing units. The processing hardware 130 in an example implementation includes a MAC controller 132 configured to perform a random access procedure with one or more user devices, receive UL MAC protocol data units (PDUs) from one or more user devices, and transmit DL MAC PDUs to one or more user devices. The processing hardware 130 can also include a PDCP controller 134 configured to transmit and/or receive DL PDCP PDUs in accordance with the manner in which the base station 104 can transmit DL data. The processing hardware further can include an RRC controller 136 to implement procedures and messaging at the RRC sublayer of the protocol communication stack. The processing hardware 130 in an example implementation includes an RRC inactive controller 138 configured to manage uplink and/or downlink communications with one or more UEs operating in the RRC_INACTIVE or RRC_IDLE state. The base station 106 can include generally similar components. In particular, components 140, 142, 144, 146, and 148 of the base station 106 can be similar to the components 130, 132, 134, 136, and 138, respectively.

The UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes an RRC inactive controller 158 configured to manage uplink and/or downlink communications when the UE 102 operates in the RRC_INACTIVE state. The processing hardware 150 in an example implementation includes a MAC controller 152 configured to perform a random access procedure with a base station, transmit uplink MAC PDUs to the base station, and receive downlink MAC PDUs from the base station. The processing hardware 150 can also include a PDCP controller 154 configured to transmit and/or receive PDCP PDUs in accordance with the manner in which the base station 106 transmits DL data and/or receives UL data. The processing hardware further can include an RRC controller 156 to implement procedures and messaging at the RRC sublayer of the protocol communication stack.

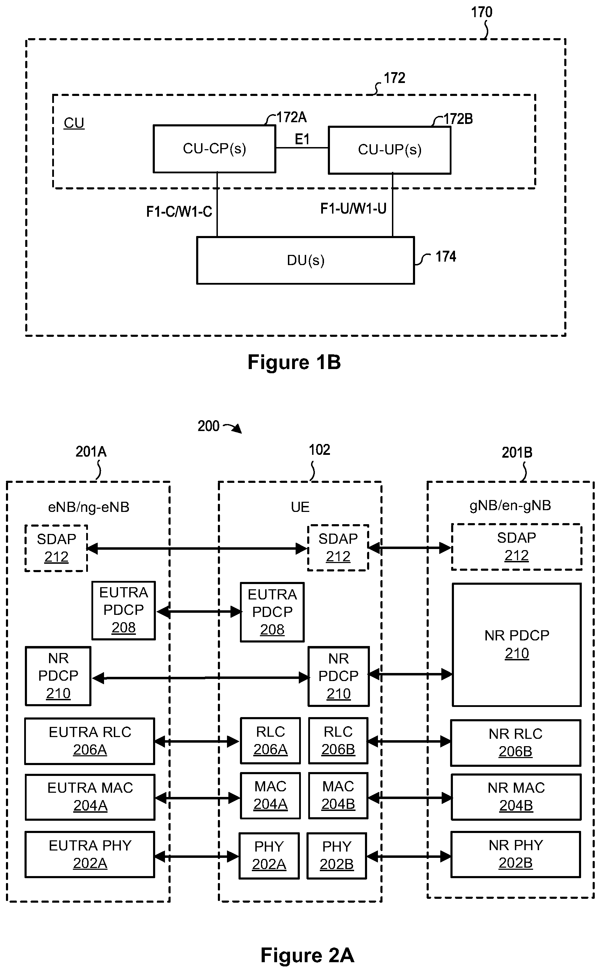

Fig. 1B depicts an example distributed or disaggregated implementation of a base station 170, which may represent one or both of the base stations 104, 106. In this implementation, the base station 170 includes a central unit (CU) 172 and one or more distributed units (DUs) 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 can include a PDCP controller, an RRC controller and/or an RRC inactive controller such as PDCP controller 134, 144, RRC controller 136, 146 and/or RRC inactive controller 138, 148. In some implementations, the CU 172 can include an RLC controller configured to manage or control one or more RLC operations or procedures. In other implementations, the CU 172 does not include an RLC controller.

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware can include a MAC controller (e.g., MAC controller 132, 142) configured to manage or control one or more MAC operations or procedures (e.g., a random access procedure), and/or an RLC controller configured to manage or control one or more RLC operations or procedures. The process hardware can also include a physical layer controller configured to manage or control one or more physical layer operations or procedures.

In some embodiments, the RAN 105 supports Integrated Access and Backhaul (IAB) functionality. In some implementations, the DU 174 operates as an (IAB)-node, and the CU 172 operates as an IAB-donor.

In some implementations, the CU 172 can include a logical node CU-CP 172A that hosts the control plane part of the PDCP protocol of the CU 172. The CU 172 can also include logical node(s) CU-UP 172B that hosts the user plane part of the PDCP protocol and/or Service Data Adaptation Protocol (SDAP) protocol of the CU 172. The CU-CP 172A can transmit control information (e.g., RRC messages, F1 application protocol messages), and the CU-UP 172B can transmit the data packets (e.g., SDAP PDUs or Internet Protocol packets).

The CU-CP 172A can be connected to multiple CU-UP 172B through the E1 interface. The CU-CP 172A selects the appropriate CU-UP 172B for the requested services for the UE 102. In some implementations, a single CU-UP 172B can connect to multiple CU-CP 172A through the E1 interface. The CU-CP 172A can connect to one or more DU 174s through an F1-C interface. The CU-UP 172B can connect to one or more DU 174 through the F1-U interface under the control of the same CU-CP 172A. In some implementations, one DU 174 can connect to multiple CU-UP 172B under the control of the same CU-CP 172A. In such implementations, the connectivity between a CU-UP 172B and a DU 174 is established by the CU-CP 172A using Bearer Context Management functions.

Fig. 2A illustrates, in a simplified manner, an example protocol stack 200 according to which the UE 102 can communicate with an eNB/ng-eNB 201A or a gNB 201B (e.g., one or both of the base stations 104, 106).

In the example stack 200, a PHY 202A of EUTRA provides transport channels to the EUTRA MAC sublayer 204A, which in turn provides logical channels to the EUTRA RLC sublayer 206A. The EUTRA RLC sublayer 206A in turn provides RLC channels to an EUTRA PDCP sublayer 208 and, in some cases, to an NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. The NR PDCP sublayer 210 in turn can provide data transfer services to SDAP 212 or an RRC sublayer (not shown in Fig. 2A). The UE 102, in some implementations, supports both the EUTRA and the NR stack as shown in Fig. 2A, to support handover between EUTRA and NR base stations and/or to support DC over EUTRA and NR interfaces. Further, as illustrated in Fig. 2A, the UE 102 can support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as SDUs, and output packets (e.g., to the RLC layer 206A or 206B) that can be referred to as PDUs. Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide signaling radio bearers (SRBs) or RRC sublayer (not shown in Fig. 2A) to exchange RRC messages or NAS messages, for example. On a user plane, the EUTRA PDCP sublayer 208 and the NR PDCP sublayer 210 can provide Data Radio Bearers (DRBs) to support data exchange. Data exchanged on the NR PDCP sublayer 210 can be SDAP PDUs, Internet Protocol (IP) packets, or Ethernet packets.

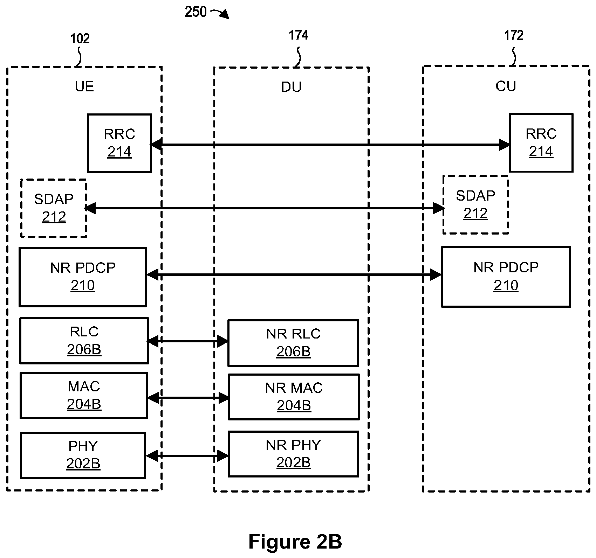

Fig. 2B illustrates, in a simplified manner, an example protocol stack 250, which the UE 102 can communicate with a DU (e.g., DU 174) and a CU (e.g., CU 172). The radio protocol stack 200 is functionally split as shown by the radio protocol stack 250 in Fig. 2B. The CU at any of the base stations 104 or 106 can hold all the control and upper layer functionalities (e.g., RRC 214, SDAP 212, NR PDCP 210), while the lower layer operations (e.g., NR RLC 206B, NR MAC 204B, and NR PHY 202B) are delegated to the DU. To support connection to a 5GC, NR PDCP 210 provides SRBs to RRC 214, and NR PDCP 210 provides DRBs to SDAP 212 and SRBs to RRC 214.

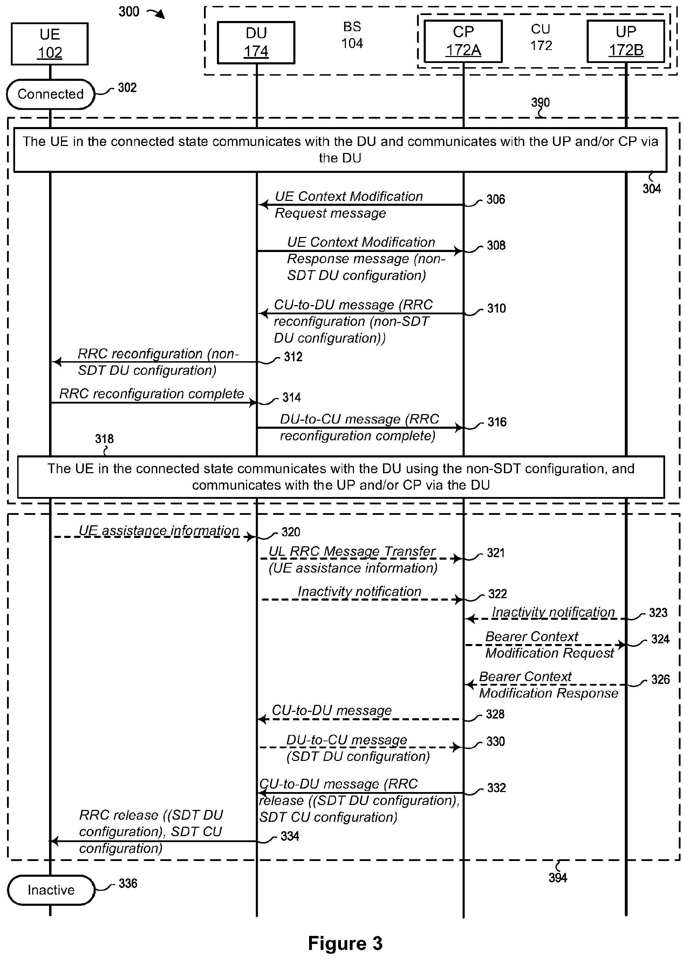

Next, several example scenarios that involve various components of Fig. 1A and relate to transmitting data in an inactive or idle state are discussed with reference to Figs. 3-5B. To simplify the following description, the "inactive state" can represent the RRC_INACTIVE or RRC_IDLE state, and the "connected state" can represent the RRC_CONNECTED state.

Referring first to Fig. 3, in a scenario 300, the base station 104 includes a CU 172 and a DU 174, and the CU 172 includes a CU-CP 172A and a CU-UP 172B. In this scenario 300, the UE 102 initially operates in a connected state 302 and communicates 304 with the DU 174, e.g., by using a DU configuration (i.e., a first non-SDT configuration), and communicates 304 with the CU-CP 172A and/or CU-UP 172B via the DU by using a CU configuration (i.e., a first non-SDT CU configuration). While the UE communicates 304 with the base station 104, the CU-CP 172A can send 306 a *UE Context Modification Request* message. In response, the DU 174 sends 308 a *UE Context Modification Response* message including a non-SDT configuration (i.e., a second non-SDT configuration) for the UE 102 to the CU-CP 172A. The CU-CP 172A generates a RRC reconfiguration message including the non-SDT DU configuration and transmits 310 a first CU-to-DU message (e.g., *DL RRC Message Transfer* message) including the RRC reconfiguration message to the DU 174. In turn, the DU 174 transmits 312 the RRC reconfiguration message to the UE 102. In response, the UE 102 transmits 314 an RRC reconfiguration complete message to the DU 174, which in turn transmits 316 a first DU-to-CU message (e.g., *UL RRC Message Transfer* message) including the RRC reconfiguration complete message to the CU-CP 172A.

After receiving 312 the RRC reconfiguration message, the UE 102 in the connected state communicates 318 with the DU 174 using the non-SDT DU configuration and communicates with the CU-CP 172A and/or CU-UP 172B via the DU. In cases where the RRC reconfiguration message does not include a CU configuration, the UE 102 communicates 318 with the CU-CP 172A and/or CU-UP 172B via the DU 174 using the first non-SDT CU configuration. In cases where the RRC reconfiguration message includes a non-SDT CU configuration (i.e., a second non-SDT CU configuration), the UE 102 communicates 318 with the CU-CP 172A and/or CU-UP 172B via the DU 174, using the second non-SDT CU configuration. In some implementations, the second non-SDT CU configuration can augment the first non-SDT CU configuration or include at least one new configuration parameter not included in the first non-SDT CU configuration. In such cases, the UE 102 and the CU-CP 172A and/or the CU-UP 172B can communicate 318 with one another using the second non-SDT CU configuration, and also using configuration parameters in the first non-SDT CU configuration that were not augmented by the second non-SDT CU configuration. In some implementations, the first non-SDT CU configuration includes configuration parameters related to operations of RRC and/or PDCP protocol layers (e.g., RRC 214 and/or NR PDCP 210), that the UE 102 and CU 172 use to communicate with one another while the UE 102 operates in the connected state. Similarly, the second non-SDT CU configuration can include configuration parameters related to operations of the RRC and/or PDCP protocol layers, that the UE 102 and CU 172 use to communicate with one another while the UE 102 operates in the connected state. In some implementations, the first non-SDT CU configuration includes configuration parameters in a *RadioBearerConfig* information element (IE) and/or *MeasConfig* IE as defined in 3GPP specification 38.331 v16.7.0. Similarly, the second non-SDT CU configuration can include configuration parameters in the *RadioBearerConfig* IE and/or *MeasConfig* IE as defined in 3GPP specification 38.331 v16.7.0. In some implementations, the first non-SDT CU configuration can be or include a *RadioBearerConfig* IE and/or a *MeasConfig* IE, and the second non-SDT CU configuration can be or include a *RadioBearerConfig* IE and/or *MeasConfig IE.*

In some implementations, the second non-SDT DU configuration can augment the first non-SDT DU configuration or include at least one new configuration parameter not included in the first non-SDT DU configuration. In such cases, the UE 102 and the DU 174 can communicate 318 with one another using the second non-SDT DU configuration and also using the configuration parameters in the first non-SDT DU configuration that were not augmented by the second non-SDT DU configuration. In some implementations, the first non-SDT DU configuration includes configuration parameters related to operations of RRC, RLC, MAC, and/or PHY protocol layers (e.g., RLC 206B, MAC 204B and/or PHY 202B), that the UE 102 and DU 174 use to communicate with one another while the UE 102 operates in the connected state. Similarly, the second non-SDT DU configuration can include configuration parameters related to operations of the RRC, RLC, MAC, and/or PHY protocol layers, that the UE 102 and DU 174 use to communicate with one another while the UE 102 operates in the connected state. In some implementations, the first non-SDT DU configuration includes configuration parameters in a *CellGroupConfig* IE as defined in 3GPP specification 38.331 v16.7.0. Similarly, the second non-SDT DU configuration can include configuration parameters in the *CellGroupConfig* IE as defined in 3GPP specification 38.331 v16.7.0. In some implementations, the first non-SDT DU configuration and the second non-SDT DU configuration can be *CellGroupConfig* IEs.

The events 306, 308, 310, 312, 314, 316 and 318 are collectively referred to in Fig. 3 as a non-SDT resource (re)configuration procedure 390, which can be optional.

While the UE 102 communicates with the base station 104 or after the non-SDT resource (re) configuration procedure 390 (if performed), the CU-CP 172A can determine to transition the UE 102 to an inactive state from the connected state, based on data inactivity of the UE 102 (i.e., based on the UE 102 in the connected state having no data activity with the base station 104). In some implementations, while the UE 102 communicates with the base station 104 or after the non-SDT resource (re) configuration procedure 390 (if performed), the UE 102 determines or detects data inactivity and transmits 320 to the DU 174, UE assistance information (e.g., a *UEAssistanceInformation* message) indicating that the UE 102 requests to transition to the inactive state with SDT configured. In turn, the DU 174 transmits 321 a UL RRC Message Transfer message including the UE assistance information to the CU-CP 172A. Thus, the CU-CP 172A can determine that the UE 102 is in data inactivity based on the UE assistance information. In other implementations, the DU 174 can perform data inactivity monitoring for the UE 102. The CU-CP 172A can transmit a CU-to-DU message (e.g., a *UE Context Setup Request* message or a *UE Context Modification* Request message) to the DU 174 to request or command the DU 174 to perform the data inactivity monitoring. In cases where the DU 174 detects or determines that the UE 102 is in data inactivity during the monitoring, the DU 174 can transmit 322 an inactivity notification (e.g., *UE Inactivity Notification* message) to the CU-CP 172A. Thus, the CU-CP 172A can determine that the UE 102 is in data inactivity based on the inactivity notification received from the DU 174. In yet other implementations, the CU-UP 172B can perform data inactivity monitoring for the UE 102. The CU-CP 172A can transmit a CP-to-UP message (e.g., a *Bearer Context Setup Request* message or a *Bearer Context Modification Request* message) to the CU-UP 172B to request or command the CU-UP 172B to perform the data inactivity monitoring. In cases where the CU-UP 172B detects or determines that the UE 102 is in data inactivity during the monitoring, the CU-UP 172B can transmit 323 an inactivity notification (e.g., Bearer Context Inactivity Notification message) to the CU-CP 172A. Thus, the CU-CP 172A can determine that the UE 102 is in data inactivity based on the inactivity notification received from the CU-UP 172B. In some implementations, the CU-CP 172A can determine that the UE 102 is in data inactivity based on the UE assistance information, the inactivity notification of the event 322, and/or the inactivity notification of the event 323.

After a certain period of data inactivity, the CU-CP 172A can determine that neither the CU 172 (i.e., the CU-CP 172A and/or the CU-UP 172B) nor the UE 102 has transmitted any data in the downlink direction or the uplink direction, respectively, during the certain period. In response to the determination, the CU-CP 172A can determine to transition the UE 102 to the inactive state with SDT configured. Alternatively, the CU-CP 172A can determine to transition the UE 102 to the inactive state without SDT configured in response to determining that the UE 102 is in data inactivity.

In response to or after determining that the UE 102 is in data inactivity (for the certain period) or determining to transition the UE 102 to the inactive state with SDT configured, the CU-CP 172A sends 324 to the CP-CU 172B a *Bearer Context Modification Request* message to suspend data transmission for the UE 102. In response, the CU-UP 172B suspends data transmission for the UE 102 and sends 326 a *Bearer Context Modification Response* message to the CU-CP 172A. In response to or after determining that the UE 102 is in data inactivity (for the certain period) or determining to transition the UE 102 to the inactive state with SDT configured, the CU-CP 172A in some implementations can send 328 a second CU-to-DU message (e.g., a *UE Context Modification Request* message) to instruct the DU 174 to provide an SDT DU configuration for the UE 102. In some implementations, the CU-CP 172A can include an SDT request indication (e.g., an IE such as a CG-SDT Query Indication IE) to request an SDT DU configuration in the second CU-to-DU message. In response to the SDT request indication or the second CU-to-DU message, the DU 174 can transmit 330 a second DU-to-CU message (e.g., *UE Context Modification Response* message) to the CU-CP 172A. Alternatively, the DU 174 does not include the SDT DU configuration in the second DU-to-CU message. Instead, the DU 174 sends to the CU-CP 172A an additional DU-to-CU message (e.g., *UE Context Modification Required* message) including the SDT DU configuration, after receiving the second CU-to-DU message or transmitting the second DU-to-CU message. The CU-CP 172A can transmit an additional CU-to-DU message (e.g., *UE Context Modification Confirm* message) to the DU 174 in response to the additional CU-to-DU message. In some alternative implementations, the CU-CP 172A can transmit the second CU-to-DU message and receive the second DU-to-CU message or the additional DU-to-CU message, before determining that the UE 102 is in data inactivity. In other alternative implementations, the CU-CP 172A can include the SDT request indication in the first CU-to-DU message of the event 308 and the DU 174 includes the SDT DU configuration in the first DU-to-CU message of the event 310 in response to the SDT request indication.

In response to determining to transition the UE 102 to the inactive state with SDT configured, the CU-CP 172A can generate an RRC release message (e.g., *RRCRelease* message *RRCConnectionRelease* message) to transition the UE 102 to the inactive state. The CU-CP 172A can include the SDT DU configuration (if obtained from the DU 174) and/or an SDT CU configuration in the RRC release message. The CU-CP 172A then sends 332 to the DU 174 a third CU-to-DU message (e.g., a *UE Context Release Command* message, a *UE Context Modification Request* message or a *DL RRC Message Transfer* message), which includes the RRC release message. In turn, the DU 174 transmits 334 the RRC release message to the UE 102. In some implementations, the DU 174 generates a MAC PDU including the RRC release message and transmits 334 the MAC PDU to the UE 102. The RRC release message instructs the UE 102 to transition to the inactive state. The UE 102 transitions 336 to the inactive state from the connected state upon receiving the RRC release message. In response to the third CU-to-DU message, the DU 174 can retain the SDT DU configuration (if generated by the DU 174 during the procedure 328, 330) and may release or retain (a portion of) the first non-SDT DU configuration and/or (a portion of) the second non-SDT DU configuration. The DU 174 can send a third DU-to-CU message (e.g., a *UE Context Release Complete* message or a *UE Context Modification Response* message) to the CU-CP 172A in response to the third CU-to-DU message.

The UE 102 monitors a PDCCH using a C-RNTI to receive a DCI, while operating 302 in the connected state. In response to or after receiving 334 the RRC release message, the UE 102 stops using the C-RNTI to monitor a PDCCH. In some implementations, the UE 102 may retain the C-RNTI in response to or after receiving 334 the RRC release message or transitioning 336 to the inactive state from the connected state. In some implementations, the UE 102 performs a two-step or a four-step random access procedure with the base station 104 (e.g., the CU-CP 172A and/or DU 174) and receives from the DU 174 a random access response message including the C-RNTI in the random access procedure. In other implementations, the UE 102 receives a RRC message (e.g., RRC reconfiguration message) including the C-RNTI from the CU-CP 172A via the DU 174 or from another base station (e.g., base station 106) not shown in Fig. 3.

The events 320 (optional), 321 (optional), 322 (optional), 323, 324, 326, 328, 330, 332 and 334 are collectively referred to in Fig. 3 as an SDT configuration procedure 394.

In some implementations, the UE 102 releases the first non-SDT DU configuration and/or second non-SDT DU configuration or at least a portion of the first non-SDT DU configuration and at least a portion of the second non-SDT DU configuration, in response to the RRC release message. In other implementations, if the RRC release message instructs the UE 102 to transition to the inactive state (i.e., RRC_IDLE), the UE 102 releases the first non-SDT DU configuration and/or second non-SDT configuration. In still other implementations, if the RRC release message instructs the UE to transition to the inactive state (i.e., RRC_INACTIVE), the UE 102 releases a first portion of the first and/or second non-SDT DU configurations and retains a second portion of the first and/or second non-SDT DU configurations.

In some implementations, the CU-CP 172A does not include an indication in the third CU-to-DU message to instruct the DU 174 to retain the SDT DU configuration, and the DU 174 retains the SDT DU configuration as described above. In other implementations, the CU-CP 172A can include an indication in the third CU-to-DU message (e.g., a *UE Context Release Command* message) to instruct the DU 174 to retain the SDT DU configuration, and the DU 174 retains the SDT DU configuration in response to the indication. If the *UE Context Release Command* message excludes the indication, the DU 174 releases the SDT DU configuration. In yet other implementations, the CU-CP 172A does not include an indication in the third CU-to-DU message (e.g., a *UE Context Modification Request* message or a *DL RRC Message Transfer* message) for the UE 102 to instruct the DU 174 to release the SDT DU configuration. Thus, the DU 174 retains the SDT DU configuration in response to the third CU-to-DU message excluding the indication. If the third CU-to-DU message includes the indication, the DU 174 releases the SDT DU configuration.

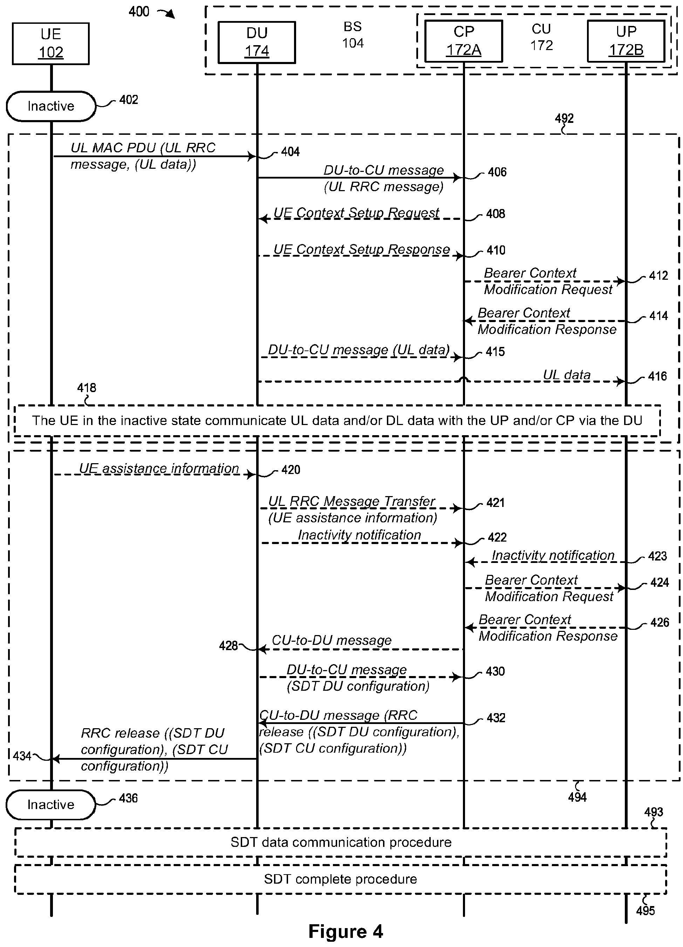

In some implementations, the parameters in the SDT CU configuration (e.g., SDT-Config IE) include a DRB list (e.g., a *std-DRB-List)* including a list of DRB ID(s) indicating ID(s) of DRB(s) configured for SDT. In some implementations, the parameters in the SDT CU configuration can include an SRB2 indication (e.g., *sdt-SRB2-Indication)* indicating a SRB2 configured for SDT. In some implementations, the parameters in the SDT CU configuration can include a compression protocol continue indication (e.g., *sdt-DRB-ContinueROHC)* indicating whether a PDCP entity for the DRB(s) configured for SDT, during SDT operation (i.e., initial and/or subsequent SDT described in Fig. 4) continues. For example, the compression protocol can be a RObust Header Compression (ROHC). In some implementations, the SDT CU configuration can include a data volume threshold (e.g., *sdt-DataVolumeThreshold)* for the UE 102 to determine whether the UE 102 can initiate SDT. The CU-CP 172A can include the SDT DU configuration in the SDT CU configuration. The "SDT CU configuration" may also be referred to simply as "SDT configuration".

In some implementations, the SDT DU configuration includes at least one of a buffer status reporting (BSR) configuration, a power headroom reporting (PHR) configuration, and/or CG-SDT configuration(s). The CG-SDT configuration(s) can include or be one or more CG configurations for CG-SDT, a DL bandwidth part (BWP) configuration for CG-SDT, a time alignment timer value for CG-SDT (i.e., a "CG-SDT time alignment timer value"), and/or a timing advance validity threshold for CG-SDT. The DU 174 configures the timing advance validity threshold (e.g., including an RSRP range) for the UE 102 to determine whether the UE 102 can initiate SDT using the configured grant configuration for CG-SDT as described for Fig. 4. In accordance with the timing advance validity threshold, the UE 102 can evaluate whether a stored timing advance value is still valid. If the UE 102 determines that the stored timing advanced value is invalid, the UE 102 can initiate a RA-SDT with the CU 172 via the DU 174 as described for Fig. 4. In some implementations, the SDT DU configuration can be a *SDT-MAC-PHY-CG-Config* IE or *SDT-MAC-PHY-Config* IE.

In some implementations, the DU 174 can start or restart a DU CG-SDT timer in response to or after receiving the SDT request indication, generating the CG-SDT configuration(s), receiving 328 the second CU-to-DU message, transmitting 330 the CG-SDT configuration(s) to the CU 172, receiving 332 the third CU-to-DU message, or transmitting 334 the CG-SDT configuration(s) to the UE 102. In some implementations, the DU 174 can start or restart the DU CG-SDT timer with a timer value to manage the CG-SDT configuration(s). In some implementations, the timer value is the same as the CG-SDT time alignment timer value. In other implementations, the timer value is close to the CG-SDT time alignment timer value. For example, the timer value can be larger than and close to the CG-SDT time alignment timer value. In another example, the timer value can be smaller than and close to the CG-SDT time alignment timer value. If and when the DU CG-SDT timer expires, the DU 174 releases the CG-SDT configuration(s). When or after releasing the CG-SDT configuration(s), the DU 174 refrains from receiving PUSCH transmissions from the UE 102 on the radio resources that were reserved or configured for the CG-SDT configuration(s). When or after releasing the CG-SDT configuration(s), the DU 174 can schedule transmissions for other UE(s) on the radio resources that were reserved or configured for the CG-SDT configuration(s).

As described above, the RRC release message 334 in some implementations can include the CG-SDT configuration(s). The UE 102 can start or restart a UE CG-SDT timer (e.g., CG-SDT time alignment timer (CG-SDT-TAT)) in response to or after receiving the CG-SDT configuration(s). In some implementations, the UE 102 can start or restart the UE CG-SDT timer with the CG-SDT time alignment timer value. If and when the CG-SDT timer expires, the UE 102 releases the CG-SDT configuration(s). When or after releasing the CG-SDT configuration(s), the UE 102 refrains from transmitting PUSCH transmissions on the radio resources that were reserved or configured for the CG-SDT configuration(s).

In some implementations, the DU 174 reserves radio resources configured in the configured grant configuration(s). In some implementations, the DU 174 releases the radio resources when releasing the SDT DU configuration or the CG-SDT configuration(s). In cases where the DU 174 does not provide the CG-SDT configuration(s) or the SDT DU configuration to the CU-CP 172A, the DU 174 releases all signaling and user data transport resources for the UE 102 in response to the third CU-to-DU message. In cases where the DU 174 provides the SDT DU configuration or the CG-SDT configuration(s) to the CU-CP 172A, the DU 174 retains signaling and user data transport resources for the UE 102 in response to or after receiving the third CU-to-DU message.

In cases where the SDT DU configuration does not include a configuration for CG-SDT, the CU-CP 172A and/or the DU 174 only configures RA-SDT for the UE 102. In such cases, the UE 102 can perform RA-SDT with the CU 172 via the DU 174 as described for Fig. 4.

In some implementations, the CU-CP 172A may not request the DU 174 to provide an SDT DU configuration when determining to transition the UE 102 to the inactive state with SDT configured. In such cases, the events 328 and 330 can omitted, and the CU-CP 172A does not include the SDT DU configuration in the RRC release message. Alternatively, the CU-CP 172A may generate the SDT DU configuration by itself (without requesting that the DU 174 provide an SDT DU configuration), and include the SDT DU configuration in the RRC release message.

In some implementations, the DU 174 does not include an SDT DU configuration in the second DU-to-CU message, e.g., if or because the UE 102 does not support CG-SDT, the DU 174 does not support CG-SDT, or the DU 174 does not have available radio resources for CG-SDT. In such cases, the RRC release message does not include an SDT DU configuration. Otherwise, the DU 174 can transmit an SDT DU configuration to the CU-CP 172A as described above. In some implementations, the DU 174 may not include a configuration for CG-SDT in the SDT DU configuration in the second DU-to-CU message, e.g., if or because the UE 102 does not support CG-SDT, the DU 174 does not support CG-SDT or the DU 174 does not have available radio resources for CG-SDT. In such cases, the SDT DU configuration does not include a CG-SDT configuration. Otherwise, the DU 174 can include the CG-SDT configuration(s) in the SDT DU configuration as described above.

In some implementations, the CU-CP 172A may request the DU 174 to provide an SDT DU configuration as described above, in cases where the UE 102 supports CG-SDT and/or the DU 174 supports CG-SDT. In cases where the UE 102 does not support CG-SDT or the DU 174 does not support CG-SDT, the CU-CP 172A does not request the DU 174 to provide an SDT DU configuration. The CU-CP 172A can receive a UE capability (e.g., UE-NR-Capability IE) of the UE 102 from the UE 102, the CN 110 (e.g., MME 114 or AMF 164) or the base station 106, while the UE operates 302 in the connected state. The UE capability indicates whether the UE 102 supports CG-SDT. Thus, the CU-CP 172A can determine whether the UE supports CG-SDT in accordance with the UE capability. In some implementations, the CU-CP 172A can receive from the DU 174 a DU-to-CU message indicating whether the DU 174 supports CG-SDT. The DU-to-CU message can be the second DU-to-CU message, the message of the event 308 or 316, or a non-UE associated message (e.g., a non-UE associated F1AP message defined in 3GPP specification 38.473).

In some implementations, the DU 174 may determine whether to provide an SDT DU configuration for the UE 102 to the CU-CP 172A, depending on whether the UE 102 supports CG-SDT or not. In addition to whether the UE 102 supports CG-SDT or not, the DU 174 may additionally determine whether to provide an SDT DU configuration for the UE 102 to the CU-CP 172A, depending on whether the DU 174 supports CG-SDT or not. In cases where the UE 102 supports CG-SDT and/or the DU 174 supports CG-SDT, the DU 174 provides an SDT DU configuration for the UE 102 to the CU-CP 172A as described above. In cases where the UE 102 does not support CG-SDT or the DU 174 does not support CG-SDT, the DU 174 does not provide an SDT DU configuration for the UE 102 (e.g., the DU 174 does not include the SDT DU configuration in the second DU-to-CU message). The DU 174 can receive the UE capability from the CU-CP 172A, while the UE operates 302 in the connected state or in the inactive state before the event 302. Thus, the DU 174 can determine whether the UE supports CG-SDT in accordance with the UE capability. In some implementations, the DU 174 can send a DU-to-CU message to the CU-CP 172A to indicate whether the DU 174 supports or does not support CG-SDT, as described above.

Referring now to Fig. 4, a scenario 400 depicts small data transmission. In the scenario 400, the base station 104 includes a CU 172 and a DU 174. The CU 172 includes a CU-CP 172A and a CU-UP 172B. In the scenario 400, the UE 102 initially operates 402 in an inactive state with SDT configured. In some implementations or scenarios, the UE 102 can transition to the inactive state with SDT configured from the connected state as described for Fig. 3. In such implementations, the UE 102 can receive a first SDT CU configuration and/or a first SDT DU configuration in a RRC release message (e.g., event 334). In other implementations or scenarios, the UE 102 can transition to the inactive state with SDT configured from the inactive state without SDT configured. For example, the UE 102 can receive from a base station (e.g., the base station 104 or base station 106) an RRC release message that transitions the UE 102 to the inactive state but does not configure SDT (e.g., indicating releasing SDT, or not including an SDT configuration in the RRC release message). In this case, the UE 102 transitions to the inactive state without SDT configured in response to the RRC release message. The UE 102 in the inactive state with or without SDT configured may perform a RAN notification area (RNA) update with the base station without state transitions. During the RNA update, the UE 102 receives another RRC release message including a first SDT CU configuration and/or a first SDT DU configuration from the base station, similar to the RRC release message of the event 334.

Later in time, the UE 102 operating in the inactive state with SDT configured initiates SDT. In response to or after initiating SDT, the UE 102 generates an initial UL MAC PDU, which includes a UL RRC message and transmits 404 the initial UL MAC PDU to the DU 174 on the cell 124. The UE 102 may start an SDT session timer in response to initiating the SDT. In some implementations, the SDT session timer can be a new timer defined in a RRC specification (e.g., v17.0.0). The DU 174 retrieves the UL RRC message from the initial UL MAC PDU, generates a first DU-to-CU message including the UL RRC message, and sends 406 the first DU-to-CU message to the CU-CP 172A. In some implementations, the first DU-to-CU message can be an *Initial UL RRC Message Transfer* message. In other implementations, the first DU-to-CU message can be a *UL RRC Message Transfer* message.

In scenarios in which the UE 102 initiates SDT to transmit UL data (e.g., a data packet) qualifying for SDT, the UE 102 includes the UL data in the initial UL MAC PDU that the UE 102 transmits 404. In scenarios in which the UE 102 initiates SDT to receive DL data, the UE 102 does not include a UL data packet in the initial UL MAC PDU that the UE 102 transmits 404. The UE 102 can initiate SDT to receive DL data in response to receiving a paging from the DU 174. In such scenarios, the UE 102 can include an SDT indication in the initial UL MAC PDU or the UL RRC message to indicate to the base station 104 that the UE 102 is initiating SDT to receive DL data.

In some implementations, the UE 102 in the inactive state performs a random access procedure with the DU 174 to transmit 404 the UL MAC PDU. In such cases, the SDT can be a RA-SDT. For example, the random access procedure can be a four-step random access procedure or a two-step random access procedure. In the case of the four-step random access procedure, the UE 102 transmits a random access preamble to the DU 174 and, in response, the DU 174 transmits to the UE 102 a random access response (RAR) including an uplink grant, a temporary C-RNTI and a timing advance command, and the UE 102 transmits 404 the UL MAC PDU in accordance with the uplink grant. The DU 174 receives 404 the UL MAC PDU in accordance with the uplink grant in the RAR. In the case of the two-step random access procedure, the UE 102 transmits 404 to the DU 174 a message A (MsgA) including a random access preamble and the UL MAC PDU in accordance with two-step random access configuration parameters. The UE 102 can receive a message B (MsgB) including a temporary C-RNTI and a timing advance command from the DU 174 in response to the MsgA. The UE 102 receives the two-step random access configuration parameters in system information broadcast by the DU 174 on the cell 124 before transmitting 404 the UL MAC PDU. The DU 174 receives 404 the UL MAC PDU in accordance with the two-step random access configuration parameters.

When the UE 102 succeeds a contention resolution in the random access procedure, the UE 102 discards a previously retained C-RNTI (e.g., described for Fig. 3) and determines the temporary C-RNTI to be a particular C-RNTI (i.e., a new C-RNTI). The UE 102 monitors a PDCCH from the DU 174 using the C-RNTI to communicate 418 data with the DU 174. More specifically, the UE 102 receives a DCI and a CRC of the DCI on a PDCCH from the DU 174 and verifies the CRC using the C-RNTI. The DCI can include an uplink grant or a downlink assignment. If the UE 102 verifies the CRC is correct and the DCI includes an uplink grant, the UE 102 uses the uplink grant to transmit 418 UL data to the DU 174. If the UE 102 verifies the CRC is correct and the DCI includes a downlink assignment, the UE 102 uses the downlink assignment to receive 418 DL data from the DU 174.

In other implementations, the UE 102 can transmit 404 the UL MAC PDU on radio resources configured in a CG configuration for SDT (i.e., a CG-SDT configuration) in cases where the UE 102 received such a configuration as described for Fig. 3. Thus, the DU 174 receives 404 the UL MAC PDU on the radio resources.

In some implementations, the UE 102 can transmit 418 subsequent UL MAC PDU(s), including one or more UL data packets, on radio resources configured in the CG configuration. In some implementations, the UE 102 can transmit 418 the subsequent UL MAC PDU(s,) on radio resources configured in uplink grant(s) received on PDCCH(s) from the DU 174. In some implementations, the UE 102 can transmit 418 some of the subsequent UL MAC PDU(s) on radio resources configured in the CG configuration and transmit 418 the other of the subsequent UL MAC PDU(s) on radio resources configured in the uplink grant(s).

If the UE 102 includes UL data in the initial UL MAC PDU, the DU 174 retrieves the UL data from the initial UL MAC PDU. In such cases, the DU 174 can include the UL data in the DU-to-CU message of the event 406. Alternatively, the DU 174 can send 415 a DU-to-CU message including the UL data to the CU-CP 172A. In this alternative, the UL data can include or be a PDCP PDU, an RRC PDU, an NAS PDU, or an LTE positioning protocol (LPP) PDU. The PDCP PDU can include a RRC PDU. As yet another alternative, the DU 174 can send 416 the UL data to the CU-UP 172B separately via a user-plane (UP) connection as described below. In this alternative, the UL data can include or be a PDCP PDU and the PDCP PDU can include an SDAP PDU, an IP packet or an Ethernet packet.

After receiving 406 the first DU-to-CU message, the CU-CP 172A in some implementations can send 408 a *UE Context Setup Request* message to the DU 174 to establish a UE Context of the UE 102 at the DU 174. In the *UE Context Setup Request* message, the CU-CP 172A can include transport layer information for one or more GTP-U tunnels between the CU-UP 172B and DU 174 so that the DU 174 can transmit the UL data and/or subsequent UL data (e.g., in small data communication 418) via the one or more GTP-U tunnels to the CU-UP 172B. In response, the DU 174 can send 410 a *UE Context Setup Response* message to the CU-CP 172A. After receiving 406 the first DU-to-CU message, transmitting 408 the *UE Context Setup Request* message or receiving 410 the *UE Context Setup Response* message, the CU-CP 172A transmits 412 to the CU-UP 172B a *Bearer Context Modification Request* message to resume data transmission for the UE 102. In response, the CU-UP 172B resumes data transmission for the UE 102 and transmits 414 a *Bearer Context Modification Response* message to the CU-CP 172A. After receiving 408 the *UE Context Setup Request* message or transmitting 410 the *UE Context Setup Response* message, the DU 174 can transmit 415 the DU-to-CU message including the UL data to the CU-CP 172A, in cases where the UL data of the event 404 includes a RRC message or is associated with a SRB (e.g., SRB1 or SRB2). In cases where the UL data is associated with a DRB, the DU 174 can transmit 416 the UL data to the CU-UP 172B.

In some implementations, the CU-CP 172A can include transport layer information of the CU-UP 172B in the *UE Context Setup Request* message. The transport layer information of the CU-UP 172B can include an IP address and/or an uplink tunnel endpoint ID (e.g., TEID). The DU 174 can transmit 416 the UL data to the CU-UP 172B using the transport layer information of the CU-UP 172B. In cases where the UE 102 has subsequent UL data (e.g., one or more UL data packets) to transmit, the UE 102 can transmit 418 one or more subsequent UL MAC PDUs including the subsequent UL data to the DU 174. In turn, the DU 174 retrieves the subsequent UL data from the subsequent UL MAC PDU(s). In cases where the subsequent UL data is associated with one or more SRB (e.g., SRB1 and/or SRB2), the DU 174 transmits 418 the one or more DU-to-CU messages (e.g., UL RRC Message Transfer message(s)) including the subsequent UL data to the CU-CP 172A. Each DU-to-CU message can include a particular UL data packet of the subsequent UL data. In cases where the CU-CP 172A receives DL data from the CN 110 or edge server, the CU-CP 172A can transmit 418 one or more CU-to-DU messages (e.g., DL RRC Message Transfer message(s)) including the DL data (e.g., one or more DL data packets) to the DU 174. In turn, the DU 174 transmits 418 one or more DL MAC PDUs including the DL data to the UE 102 operating in the inactive state. In some implementations, the DL data can include or be NAS PDU(s) and/or LPP PDU(s).

In cases where the subsequent UL data is associated with one or more DRBs, the DU 174 transmits 418 the subsequent UL data to the CU-UP 172B, similar to the event 416. In some implementations, the DU 174 can include DU transport layer information of the DU 174 in the *UE Context Setup Response* message. The CU-CP 172A can then include the transport layer information of the DU 174 in the *Bearer Context Modification Request* message. The transport layer information of the DU 174 can include an IP address and/or a downlink TEID. In cases where the CU-UP 172B receives DL data from the CN 110 or edge server, the CU-UP 172B can transmit 418 the DL data (e.g., one or more DL data packets) to the DU 174 using the transport layer information of the DU 174. The DU 174 then transmits 418 one or more DL MAC PDUs including the DL data to the UE 102 operating in the inactive state.

In some implementations, the UE 102 can include a buffer status report or a power headroom report in the initial and/or subsequent UL MAC PDU(s), e.g., in accordance with the BSR configuration and/or PHR configuration, respectively. In the buffer status report, the UE 102 can include or indicate its buffer status for one or more logical channels or logical channel groups. In the power headroom report, the UE 102 can include or indicate power headroom status or value.

In some example scenarios, the subsequent UL data and/or DL data described above include IP packet(s), Ethernet packet(s), or application packet(s). In other scenarios, the UL data can include or be PDU(s) (e.g., RRC PDU(s), PDCP PDU(s) or RLC PDU(s)) that includes RRC message(s), NAS message(s), IP packet(s), Ethernet packet(s), or application packet(s).

The events 404, 406, 408, 410, 412, 414, 415 and 416 are collectively referred to in Fig. 4 as a small data transmission procedure 492.

In some implementations, the UL RRC message is an (existing) RRC resume request message (e.g., an *RRCResumeRequest* message, an *RRCResumeRequest*] message, an *RRCConnectionResumeRequest* message, or an *RRCConnectionResumeRequest*] message). In other implementations, the UL RRC message can be a new RRC resume request message, similar to the existing RRC resume request message. For example, the new RRC resume request message may be defined in future 3GPP standards documentation. The new RRC resume request message may have the format of an existing RRC resume request message. In the case of the downlink SDT, the UL RRC message can include an SDT indication, which can be a field or information element (IE) (e.g., *resumeCause* or *ResumeCause*)*.* In some implementations, the UL RRC message is a common control channel (CCCH) message.

After the UE 102 transmits 404 the UL MAC PDU or communicates 418 the subsequent UL data and/or DL data with the DU 174, the CU-CP 172A can determine to stop the SDT for the UE 102 based on data inactivity of the UE 102 (i.e., based on the UE 102 in the inactive state having no data activity with the base station 104). After the UE 102 transmits 404 the UL MAC PDU or communicates 418 the subsequent UL data and/or DL data with the DU 174, the UE 102 in the inactive state determines or detects data inactivity and transmits 420 to the DU 174, UE assistance information (e.g., a *UEAssistanceInformation* message) indicating that the UE 102 decides (e.g., needs) or requests to stop the SDT. In turn, the DU 174 transmits 421 a UL RRC Message Transfer message including the UE assistance information to the CU-CP 172A. Thus, the CU-CP 172A can determine that the UE 102 is in data inactivity based on the UE assistance information. In other implementations, the DU 174 can perform data inactivity monitoring for the UE 102. The CU-CP 172A can transmit a CU-to-DU message (e.g., the *UE Context Setup Request* message of the event 408 or a *UE Context Modification Request* message) to the DU 174 to request or command the DU 174 to perform the data inactivity monitoring. In cases where the DU 174 detects or determines that the UE 102 is in data inactivity during the monitoring, the DU 174 can transmit 422 an inactivity notification (e.g., *UE Inactivity Notification* message) to the CU-CP 172A. Thus, the CU-CP 172A can determine that the UE 102 is in data inactivity based on the inactivity notification received from the DU 174. In yet other implementations, the CU-UP 172B can perform data inactivity monitoring for the UE 102. The CU-CP 172A can transmit a CP-to-UP message to the CU-UP 172B to request or command the CU-UP 172B to perform the data inactivity monitoring. In some implementations, the CP-to-UP message can be a *Bearer Context Setup Request* message or a *Bearer Context Modification Request* message if sent before the UE 102 initiates the SDT. In other implementations, the CP-to-UP message can be a *Bearer Context Modification Request* message if sent during the SDT (e.g., the event 412). In cases where the CU-UP 172B detects or determines that the UE 102 is in data inactivity during the monitoring, the CU-UP 172B can transmit 423 an inactivity notification (e.g., Bearer Context Inactivity Notification message) to the CU-CP 172A. Thus, the CU-CP 172A can determine that the UE 102 is in data inactivity based on the inactivity notification received from the CU-UP 172B. In some implementations, the CU-CP 172A can determine that the UE 102 is in data inactivity based on the UE assistance information, the inactivity notification of the event 422, and/or the inactivity notification of the event 423.

After a certain period of data inactivity, the CU-CP 172A can determine that neither the CU 172 nor the UE 102 has transmitted any data in the downlink direction or the uplink direction, respectively, during the certain period. In response to the determination, the CU-CP 172A can determine to stop the SDT. Alternatively, the CU-CP 172A can determine to immediately stop the SDT for the UE 102 in response to determining that the UE 102 is in data inactivity.

In response to or after determining that the UE 102 is in data inactivity (for the certain period) or determining to transition the UE 102 to the inactive state with SDT configured, the CU-CP 172A sends 424 to the CP-CU 172B a *Bearer Context Modification Request* message to suspend data transmission for the UE 102. In response, the CU-UP 172B suspends data transmission for the UE 102 and sends 426 a *Bearer Context Modification Response* message to the CU-CP 172A. In response to or after determining that the UE 102 is in data inactivity (for the certain period) or determining to transition the UE 102 to the inactive state with SDT configured, the CU-CP 172A sends 428 a second CU-to-DU message (e.g., a *UE Context Modification Request* message) to instruct the DU 174 to provide an SDT DU configuration (e.g., a second SDT DU configuration) for the UE 102. In some implementations, the CU-CP 172A can include a SDT request indication (e.g., a field or IE) to request an SDT DU configuration in the second CU-to-DU message. In response to the SDT request indication or the second CU-to-DU message, the DU 174 transmits 430 a second DU-to-CU message (e.g., *UE Context Modification Response* message) including the second SDT DU configuration to the CU-CP 172A. Alternatively, the DU 174 does not include the second SDT DU configuration in the second DU-to-CU message. Instead, the DU 174 sends to the CU-CP 172A another DU-to-CU message (e.g., *UE Context Modification Required* message) including the second SDT DU configuration, after receiving the second CU-to-DU message or transmitting the second DU-to-CU message. In some alternative implementations, the CU-CP 172A can transmit the second CU-to-DU message and receive the second DU-to-CU message (or the other DU-to-CU message) before determining that the UE 102 is in data inactivity.

In response to determining to transition the UE 102 to the inactive state with SDT configured, the CU-CP 172A can generate an RRC release message (e.g., *RRCRelease* message or *RRCConnectionRelease* message) to transition the UE 102 to the inactive state. The CU-CP 172A can include the second SDT DU configuration (if obtained from the DU 174) and a second SDT CU configuration in the RRC release message.

Alternatively, the CU-CP 172A may not include an SDT configuration in the RRC release message. In this alternative, the CU-CP 172A can indicate the UE 102 to release or retain the first SDT CU configuration and/or the first SDT DU configuration in the RRC release message. For example, the CU-CP 172A can include a release indication indicating releasing the first SDT CU configuration or the first SDT DU configuration in the RRC release message. If the RRC release message does not include the release indication, the UE 102 retains the first SDT CU configuration and/or the first SDT DU configuration.

The CU-CP 172A then sends 432 to the DU 174 a third CU-to-DU message including the RRC release message. The DU 174 then transmits 434 the RRC release message to the UE 102. In some implementations, the DU 174 generates a MAC PDU including the RRC release message and transmits 434 the MAC PDU to the UE 102. The RRC release message instructs the UE 102 to be in the inactive state (e.g., to transition to the inactive state or to maintain the inactive state). The UE 102 stops the SDT and remains 436 in the inactive state upon receiving 434 the RRC release message.

The events 420 (optional), 421 (optional), 422 (optional), 423, 424, 426, 428, 430, 432 and 434 are collectively referred to in Fig. 4 as an SDT complete procedure 494.

During an SDT session (i.e., events 492 and 494), the UE 102 monitors a PDCCH using a C-RNTI to receive a DCI. In some implementations, the UE 102 receives the C-RNTI in the random access procedure described for the event 404. In other implementations, the UE 102 can receive and retain the C-RNTI as described for Fig. 3. In response to or after receiving 434 the RRC release message, the UE 102 stops using the C-RNTI to monitor a PDCCH. The UE 102 may retain the C-RNTI in response to or after receiving 434 the RRC release message or transitioning 436 to the inactive state from the connected state. In cases where the RRC release message 434 configures CG-SDT, the UE 102 in some implementations can retain the C-RNTI. In cases where the RRC release message 434 does not configure or releases CG-SDT, the UE 102 in some implementations can release the C-RNTI.

In some implementations, the second SDT CU configuration can be the same as the first SDT CU configuration. In other implementations, the second SDT CU configuration can be different from the first SDT CU configuration. The UE 102 can update (e.g., replace or modify) the first SDT CU configuration with the second SDT CU configuration. In some implementations, the CU-CP 172A can include an indication in the RRC release message to indicate that the UE 102 is to update the first SDT CU configuration with the second SDT CU configuration. In such implementations, the UE 102 can update the first SDT CU configuration with the second SDT CU configuration in response to the indication. In other implementations, the CU-CP 172A can include a modification indication in the RRC release message to indicate that the UE 102 is to modify the first SDT CU configuration with the second SDT CU configuration. In such implementations, the UE 102 can modify the first SDT CU configuration with the second SDT CU configuration in response to the modification indication. In yet other implementations, the CU-CP 172A can include a setup indication in the RRC release message to indicate that the UE 102 is to replace the first SDT CU configuration with the second SDT CU configuration. In such implementations, the UE 102 can replace the first SDT CU configuration with the second SDT CU configuration in response to the setup indication.

In some implementations, the second SDT DU configuration can be the same as the first SDT DU configuration. In other implementations, the second SDT DU configuration can be different from the first SDT DU configuration. The UE 102 can update (e.g., replace or modify) the first SDT DU configuration with the second SDT DU configuration. In some implementations, the DU 174 can include an indication in the second SDT DU configuration to indicate that the UE 102 is to update the first SDT DU configuration with the second SDT DU configuration. In such implementations, the UE 102 can update the first SDT DU configuration with the second SDT DU configuration in response to the indication. In other implementations, the DU 174 can include a modification indication in the second SDT DU configuration to indicate that the UE 102 is to modify the first SDT DU configuration with the second SDT DU configuration. In such implementations, the UE 102 can modify the first SDT DU configuration with the second SDT DU configuration in response to the modification indication. In yet other implementations, the DU 174 can include a setup indication in the second SDT DU configuration to indicate that the UE 102 is to replace the first SDT DU configuration with the second SDT DU configuration. In such implementations, the UE 102 can replace the first SDT DU configuration with the second SDT DU configuration in response to the setup indication.

In cases where the CU-CP 172A and/or the DU 174 support delta configuration, the CU-CP 172A may not send 428 the CU-to-DU message to obtain the second SDT DU configuration from the DU 174. Unless a condition for releasing the first SDT configuration is satisfied, the DU 174 retains the first SDT DU configuration. Alternatively, the CU-CP 172A can include the first SDT DU configuration in the second CU-to-DU message to cause the DU 174 to retain the first SDT DU configuration. In these cases, the CU-CP 172A may not include an SDT DU configuration and/or a SDT CU configuration in the RRC release message to cause the UE 102 to continue using the first SDT CU configuration and/or the first SDT DU configuration. In some implementations, the CU-CP 172A may not include a release indication in the RRC release message in order to configure the UE 102 to continue using the first SDT DU configuration and/or the first SDT CU configuration. The release indication indicates that the UE 102 is to release the previously received SDT DU configuration and/or the SDT CU configuration. In cases where the CU-CP 172A includes the release indication in the RRC release message, the UE 102 releases the first SDT CU configuration and/or the first SDT DU configuration in response to the release indication.

In cases where the CU-CP 172A and/or DU 174 do not support delta configurations, the CU-CP 172A may include the SDT DU configuration and/or the SDT CU configuration in the RRC release message as described above.

In response to the third CU-to-DU message, the DU 174 can retain the second SDT DU configuration and may or may not release the first non-SDT DU configuration and/or second non-SDT DU configuration. The DU 174 can send a third DU-to-CU message (e.g., a *UE Context Release Complete* message or a *UE Context Modification Response* message) to the CU-CP 172A in response to the third CU-to-DU message. In some implementations, if the RRC release message instructs the UE 102 to transition to the inactive state (i.e., RRC_IDLE), the UE 102 releases a non-SDT configuration (e.g., the first non-SDT DU configuration, first non-SDT CU configuration, second non-SDT DU configuration and/or second non-SDT CU configuration described for Fig. 3) and at least one SDT configuration (e.g., the SDT DU configuration and SDT CU configuration described for Fig. 3).

The events 420 (optional), 421 (optional), 422 (optional), 423, 424, 426, 428, 430, 432 and 434 are collectively referred to in Fig. 4 as a SDT complete procedure 494, similar to the procedure 394. Examples and implementations for events 320, 321, 322, 323, 324, 326, 328, 330, 332, 334 can apply to events 420, 421, 422, 423, 424, 426, 428, 430, 432, 434, respectively. After stopping the SDT, the UE 102 can perform 493 another SDT procedure with the base station 104, similar to the procedure 492. After completing the procedure 493, the base station 104 can perform 495 an SDT complete procedure with the UE 102, similar to the procedure 494.

In some implementations, the CU-CP 172A may not request the DU 174 to provide an SDT DU configuration for transitioning the UE 102 to the inactive state with SDT configured. In such cases, the events 428 and 430 can omitted. In such cases, the CU-CP 172A does not include an SDT DU configuration in the RRC release message. Alternatively, the CU-CP 172A may generate the SDT DU configuration by itself and include the SDT DU configuration in the RRC release message.

In some implementations, the DU 174 does not include an SDT DU configuration in the second DU-to-CU message, e.g., if or because the UE 102 does not support CG-SDT, the DU 174 does not support CG-SDT or the DU 174 does not have available radio resources for CG-SDT. In such cases, the RRC release message does not include a SDT DU configuration. Otherwise, the DU 174 can include an SDT DU configuration as described above. In some implementations, the DU 174 does not include a CG-SDT configuration in the SDT DU configuration in the second DU-to-CU message, e.g., if or because the UE 102 does not support CG-SDT, the DU 174 does not support CG-SDT or the DU 174 does not have available radio resources for CG-SDT. In such cases, the SDT DU configuration does not include a CG-SDT configuration. Otherwise, the DU 174 can include the at least one CG-SDT configuration in the SDT DU configuration as described above.

In some implementations, the CU-CP 172A can request the DU 174 to provide an SDT DU configuration as described above, in cases where the UE 102 supports CG-SDT and/or the DU 174 supports CG-SDT. In cases where the UE 102 does not support CG-SDT or the DU 174 does not support CG-SDT, the CU-CP 172A does not request the DU 174 to provide an SDT DU configuration. The CU-CP 172A can receive a UE capability (e.g., UE-NR-Capability IE) of the UE 102 from the UE 102, the CN 110 (e.g., MME 114 or AMF 164), or the base station 106, either before the UE 102 initiated the SDT, while the UE operates 402 in the inactive state, while the UE performs the SDT (e.g., in the UE Context Setup Request message of the event 408 or the CU-to-DU message of the event 428), or while the UE operates in the connected state as described for Fig. 3. The UE capability indicates whether the UE 102 supports CG-SDT. Thus, the CU-CP 172A can determine whether the UE supports CG-SDT in accordance with the UE capability. In some implementations, the CU-CP 172A can receive from the DU 174 a DU-to-CU message indicating whether the DU 174 supports CG-SDT. The DU-to-CU message can be the second DU-to-CU message, the message of the event 308 or 316, or a non-UE associated message (e.g., a non-UE associated F1AP message defined in 3GPP specification 38.473).

In some implementations, the DU 174 may determine whether to provide an SDT DU configuration for the UE 102 to the CU-CP 172A, depending on whether the UE 102 supports CG-SDT or not. In addition to whether the UE 102 supports CG-SDT or not, the DU 174 may additionally determine whether to provide an SDT DU configuration for the UE 102 to the CU-CP 172A, depending on whether the DU 174 supports CG-SDT or not. In cases where the UE 102 supports CG-SDT and/or the DU 174 supports or enables CG-SDT, the DU 174 provides an SDT DU configuration for the UE 102 to the CU-CP 172A as described above. In cases where the UE 102 does not support CG-SDT or the DU 174 does not support CG-SDT, the DU 174 does not provide an SDT DU configuration for the UE 102 (e.g., the DU 174 does not include the SDT DU configuration in the second DU-to-CU message). The DU 174 can receive the UE capability from the CU-CP 172A, e.g., while the UE 102 operates in the connected state or in the inactive state. Thus, the DU 174 can determine whether the UE 102 supports CG-SDT in accordance with the UE capability. In some implementations, the DU 174 can send a DU-to-CU message to the CU-CP 172A to indicate whether the DU 174 supports or does not support CG-SDT, as described above.

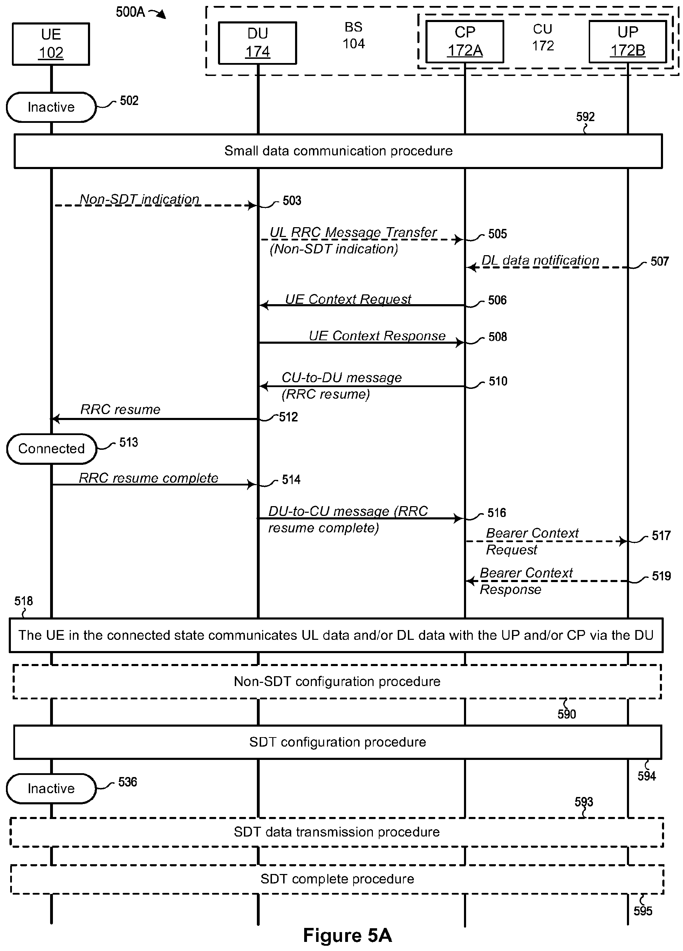

Referring now to Fig. 5A, a scenario 500A depicts small data transmission and transitioning from SDT to non-SDT. In the scenario 500A, the base station 104 includes a CU 172 and a DU 174, the CU 172 includes a CU-CP 172A and a CU-UP 172B, and the UE 102 initially operates 502 in an inactive state with SDT configured, similar to the event 402. The UE 102 then performs 592 a small data transmission procedure with the base station 104, similar to the event 492.

During the small data transmission procedure 592, the CU-CP 172A can determine whether to transition the UE 102 to a connected state, e.g., based on UL or DL data activity of the UE 102. In some implementations, the UE 102 can transmit 503 to the DU 174 a non-SDT indication message to indicate that UL data is available or request to transition to the connected state. In some implementations, the UE 102 can transmit 503 to the DU 174 the non-SDT indication message on radio resources configured in a CG configuration for SDT (or CG-SDT configuration). In other implementations, the UE 102 can receive an uplink grant on a PDCCH from the DU 174 using a C-RNTI and transmit 503 to the DU 174 the non-SDT indication message on radio resources configured in the uplink grant. The DU 174 then transmits 505 a *UL RRC Message Transfer* message including the non-SDT indication message to the CU-CP 172A. The CU-CP 172A can determine to transition the UE 102 to the connected state in response to or based on the non-SDT indication message. In other implementations, the CU-UP 172B receives DL data from the CN 110, and in response transmits 507 a DL data notification (e.g., *DL Data Notification* message) to the CU-CP 172A to indicate that DL data is available for transmission. The CU-CP 172A can determine to transition the UE 102 to the connected state in response to or based on the DL data notification. In yet other implementations, the CU-CP 172A can determine to transition the UE 102 to the connected state based on measurement results received from the UE 102. In yet other implementations, the CU-CP 172A receives DL data (e.g., NAS message(s)) from the CN 110 and in response can determine to transition the UE 102 to the connected state.

In some implementations, the non-SDT indication message can be a RRC message (e.g., a *UEAssistanceInformation* message or a new RRC message).

In some implementations, the UL data and/or DL data is/are associated with radio bearer(s) (e.g., SRB(s) and/or DRB(s)). For example, the UL data can include RRC message(s) or NAS message(s) associated to SRB(s). In another example, the UL data includes IP packet(s) associated with DRB(s). In some implementations, the UE 102 can include ID(s) of the radio bearer(s) in the non-SDT indication message. Thus, the CU-CP 172A can determine whether to transition the UE 102 to the connected state based on the ID(s). For example, if the radio bearer(s) identified by the ID(s) do not qualify for SDT, the CU-CP 172A can determine to transition the UE 102 to the connected state. Otherwise, the CU-CP 172A can determine not to transition the UE 102 to the connected state. In some implementations, the UE 102 can include data volume information of the UL data in the non-SDT indication message. Thus, the CU-CP 172A can determine whether to transition the UE 102 to the connected state based on the data volume information. In one implementation, the data volume information includes a total data volume of the UL data, which can be quantized or rounded to a value that can be indicated in the data volume information. In another implementation, the data volume information includes a data volume for each of the radio bearer(s), which can be quantized or rounded to a value that can be indicated in the data volume information. For example, if the total data volume is above a predetermined threshold, the CU-CP 172A can determine to transition the UE 102 to the connected state. Otherwise, the CU-CP 172A can determine not to transition the UE 102 to the connected state. In another example, if the data volume for a particular radio bearer is above a predetermined threshold, the CU-CP 172A can determine to transition the UE 102 to the connected state. Otherwise, the CU-CP 172A can determine not to transition the UE 102 to the connected state. In yet another example, if the total data volume is above a predetermined threshold and the data volume for a particular radio bearer is above another predetermined threshold, the CU-CP 172A can determine to transition the UE 102 to the connected state. Otherwise, the CU-CP 172A can determine not to transition the UE 102 to the connected state.

In response to or after determining to transition the UE 102 to the connected state, the CU-CP 172A transmits 506 a UE Context Request message (e.g., a *UE Context Setup Request* message or a *UE Context Modification Request* message) to the DU 174. In response, the DU 174 transmit 508 a UE Context Response message (e.g., a *UE Context Setup Response* message or a *UE Context Modification Response* message) to the CU-CP 172A. In some implementations, the DU 174 can include a non-SDT DU configuration (i.e., a first non-SDT DU configuration) in the UE Context Response message. After receiving the UE Context Response message, the CU-CP 172A transmits 510 a CU-to-DU message including a RRC resume message (e.g., an *RRCResume* message or an *RRCConnectionResume* message) to the DU 174. The DU 174 then transmits 512 the RRC resume message to the UE 102. In some implementations, the DU 174 can transmit 512 one or more PDUs including the RRC resume message to the UE 102. The PDU(s) can be MAC PDU(s) or RLC PDU(s). In some implementations, the CU-to-DU message can be a *DL RRC Message Transfer* message or a *UE Context Modification Request* message. In the case of the *UE Context Modification Request* message, the DU 174 can transmit a *UE Context Modification Response* message to the CU-CP 172A in response. In response to the RRC resume message, the UE 102 transitions 513 to the connected state and transmits 514 a RRC resume complete message (e.g., an *RRCResumeComplete* message or an *RRCConnectionResumeComplete* message) to the DU 174. In cases where the UE Context Response message includes the non-SDT DU configuration, the CU-CP 172A includes the non-SDT DU configuration in the RRC resume message. The DU 174 transmits 516 a DU-to-CU message including the RRC resume complete message to the CU-CP 172A. After determining to transition the UE 102 to the connected state, the CU-CP 172A can transmit a 517 Bearer Context Request message (e.g., a *Bearer Context Setup Request* message or a *Bearer Context Modification Request* message) to the CU-UP 172B to indicate the CU-UP 172B to resume all suspended radio bearer(s) for the UE 102. In response, the CU-UP 172B resumes all suspended radio bearer(s) for the UE 102 and transmits 519 a Bearer Context Response message (e.g., a *Bearer Context Setup Response* message or a *Bearer Context Modification Response* message) to the CU CP-172A. In some implementations, the CU-CP 172A can transmit 517 the Bearer Context Request message after transmitting 506 the UE Context Request message, receiving 508 the UE Context Response message, transmitting 510 the CU-to-DU message, or receiving 516 the DU-to-CU message.

In some implementations, the CU-CP 172A can include an indication indicating the DU 174 to generate a non-SDT configuration in the UE Context Request message, and the DU 174 includes the first non-SDT DU configuration in the UE Context Response message in response to the indication. In yet other implementations, the CU-CP 172A stores a non-SDT DU configuration (i.e., a second non-SDT DU configuration) that a DU (e.g., the DU 174 or another DU or base station) uses to communicate with the UE 102. The UE 102 can also store the second non-SDT DU configuration. In such cases, the CU-CP 172A includes the second non-SDT DU configuration in the UE Context Request message, and the DU 174 can includes the first non-SDT DU configuration in the UE Context Response message in response to receiving the second non-SDT DU configuration. In some implementations, the first non-SDT DU configuration augments or replaces the second non-SDT DU configuration. Examples and implementations for the first and second non-SDT DU configurations may be the same as those described above for the non-SDT DU configurations. In some implementations, the DU 174 can transmit an additional DU-to-CU message (e.g., a *UE Context Modification Required* message) including the first non-SDT DU configuration to the CU-CP 172A instead of including the first non-SDT DU configuration in the UE Context Response message.

After transitioning to the connected state, the UE 102 communicates 518 UL data and/or DL data with the CU-CP 172A and/or CU-UP 172B via the DU 174. The UL data can include the UL data triggering the UE 102 to transmit the non-SDT indication message. The UL data can also include new UL data available for transmission. The DL data can include the DL data received from the CN 110 as described above. The DL data can also include new DL data received from the CN 110. In cases where the RRC resume message includes the first non-SDT DU configuration, the UE 102 communicates 518 with the DU 174 using the first non-SDT DU configuration. In cases where the second non-SDT DU configuration is not completely replaced by the first non-SDT DU configuration (i.e., the UE 102 does not release the second non-SDT DU configuration in response to the RRC resume message), the UE 102 can communicate 518 with the DU 174 using the configuration parameters in the second non-SDT DU configuration, which are not augmented by the first non-SDT DU configuration.

In some implementations, the DU 174 may not provide the first non-SDT DU configuration to the CU-CP 172A in the UE Context Response message and the additional DU-to-CU message. In such cases, the RRC resume message does not include the first non-SDT configuration, and the UE 102 and the DU 174 communicate 518 with one another using the second non-SDT DU configuration.

In some implementations, the UE 102 releases the SDT configuration(s) (e.g., the SDT CU configuration, the SDT DU configuration and/or the CG-SDT configuration(s) in response to the RRC resume message or transitioning to the connected state. In some implementations, the base station 104 (e.g., the CU-CP 172A and/or DU 174) releases the SDT configuration(s) in response to or after transitioning the UE 102 to the connected state, receiving 510 the CU-to-DU message, or transmitting 510, 512 the RRC resume message. In other implementations, the base station 104 releases the SDT configuration(s) in response to or after receiving an acknowledgement (e.g., a RLC acknowledgement or a HARQ acknowledgement) for the PDU(s) including the RRC resume message. In yet other implementations, the base station 104 (e.g., the CU-CP 172A and/or DU 174) releases the SDT configuration(s) in response to or after communicating 506 the UE Context Request message or communicating 508 the UE Context Response message.

In other implementations, the UE 102 retains the SDT configuration(s) (e.g., the SDT CU configuration, the SDT DU configuration and/or the CG-SDT configuration(s)) in response to or after receiving the RRC resume message or transitioning to the connected state. In some implementations, the UE 102 refrains from using the SDT configuration(s) to communicate (e.g., transmit 514 the RRC resume complete message and/or communicate 518 data) with the base station 104, while operating in the connected state. In other implementations, the UE 102 can use the SDT configuration(s) to communicate (e.g., 514 the RRC resume complete message and/or 518 data) with the base station 104, while operating in the connected state. In some implementations, the base station 104 retains the SDT configuration(s) in response to or after transitioning the UE 102 to the connected state or transmitting the RRC resume message. In some implementations, the base station 104 refrains from using the SDT configuration(s) to communicate (e.g., receive 514 the RRC resume complete message and/or communicate 518 data) with the UE 102 operating in the connected state. In other implementations, the base station 104 can use the SDT configuration(s) to communicate (e.g., receive 514 the RRC resume complete message and/or communicate 518 data) with the UE 102 operating in the connected state.

Later in time, the base station 104 can perform a non-SDT configuration procedure 590 and an SDT configuration procedure 594 with the UE 102, similar to the procedure 390 and the procedure 394, respectively. The UE 102 transitions 536 to the inactive state in response to receiving an RRC release message in the procedure 594. Then, the base station 104 can perform an SDT procedure 593 and an SDT complete procedure 595 with the UE 102, similar to the procedure 492 and the procedure 494, respectively.

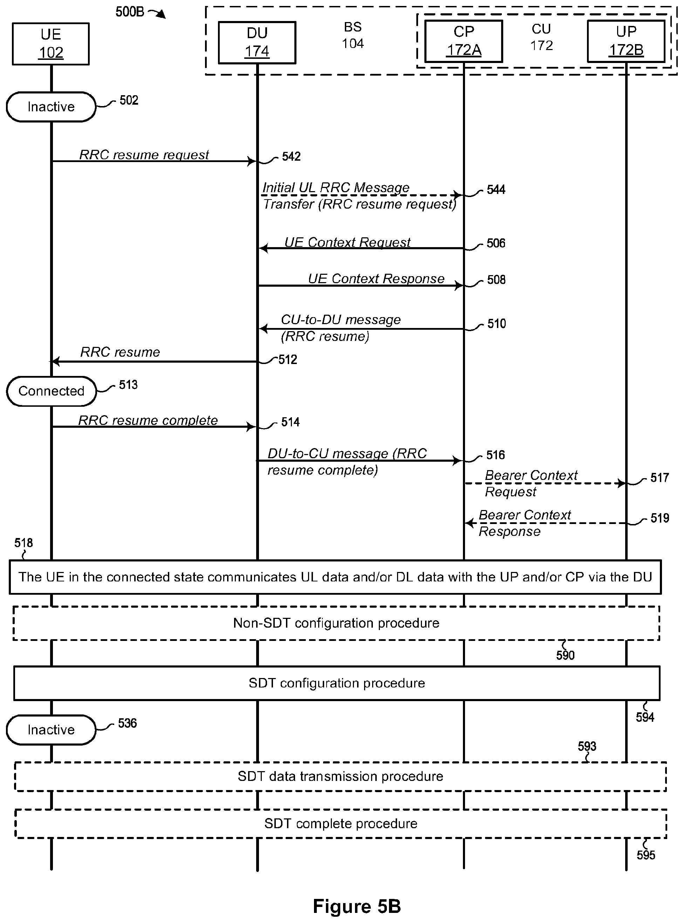

Referring next to Fig. 5B, a scenario 500B is generally similar to the scenario 500A, except that the UE 102 initiates an RRC connection resume procedure instead of the small data communication procedure 592. The differences between the scenarios 500B and 500A are discussed below.

In response to initiating the RRC connection resume procedure, the UE 102 transmits 542 a RRC resume request message to the DU 174, which in turn transmits 544 an *Initial UL RRC Message Transfer* message including the RRC resume request message (e.g., an *RRCResumeRequest* message or an *RRCConnectionResumeRequest* message) to the CU-CP 172A. In response to receiving the RRC resume request message, the CU-CP 172A determines to transition the UE 102 to the connected state. In response to or after determining to transition the UE 102 to the connected state, the CU-CP 172A transitions the UE 102 to the connected state as described for the scenario 500A.

In some implementations, the UE 102 can generate a UL MAC PDU including the RRC resume request message and transmits 542 UL MAC PDU to the DU 174. In some implementations, the UE 102 can transmit 542 to the DU 174 the UL MAC PDU on radio resources configured in a CG configuration for SDT. In other implementations, the UE 102 can perform a random access procedure to transmit the UL MAC PDU, similar to the event 404.

Next, several example methods, which can be implemented/performed by one or more RAN nodes (e.g., base stations, DUs, or CUs) to support data communications in the inactive state, are discussed with reference to Figs. 6A-9.

Fig. 6A illustrates a method 600A, which can be implemented/performed by a RAN node (e.g., the base station 104, the CU 172, the CU-CP 172A, or the DU 174) for managing an SDT configuration for a UE (e.g., the UE 102).

The method 600A begins at block 602, where the RAN node transmits a first message including an SDT configuration to a UE (e.g., events 332, 334, 432, 434, 394, 494, 495, 594, 595). At block 604 (optional), the RAN node can communicate data with the UE (e.g., events 404, 406, 415, 416, 418, 503, 505, 510, 512, 514, 516, 518, 542, 544, 492, 592). At block 606, the RAN node determines that the UE is to be in an inactive state (i.e., determines to transition the UE to an inactive state or to maintain the UE in the inactive state). At block 608, the RAN node determines whether to release the SDT configuration. If the RAN node determines to release the SDT configuration, the flow proceeds to block 610. At block 610, the RAN node transmits to the UE a second message, including a release indication indicating releasing the SDT configuration, to transition the UE to, or maintain the UE in, the inactive state (e.g., events 432, 434, 394, 494, 495, 594, 595). Otherwise, if the RAN node determines not to release the SDT configuration, the flow proceeds to block 612. At block 612, the RAN node transmits to the UE a third message, excluding the release indication, to transition the UE to, or to maintain the UE in, the inactive state (e.g., events 432, 434, 394, 494, 495, 594, 595). The blocks 606, 608, 610, and 612 are collectively referred to in Fig. 6A as block 650.

In some implementations, the RAN node at block 604 communicates data with the UE operating in the inactive state using the SDT configuration. In other implementations, the RAN node at block 604 communicates data with the UE operating in a connected state without using the SDT configuration. In some implementations, the data at block 604 can include NAS PDU(s), PDCP PDU(s) or RRC PDU(s).

The first, second, and third messages are RRC release messages (e.g., *RRCRelease* messages). In some implementations, the RAN node can receive from the UE an acknowledgement confirming that the UE receives the second or third message. For example, the acknowledgement can be an RLC acknowledgement (e.g., RLC Control PDU) or a HARQ acknowledgement.

In some implementations, the SDT configuration can be or include a CG-SDT configuration. The RAN node can start a CG-SDT timer (e.g., the DU CG-SDT timer described above) upon determining to transmit, or upon generating or transmitting, the CG-SDT configuration. In cases where the RAN node determines to release the SDT configuration, the RAN node can stop the CG-SDT timer in response to or after determining to release the SDT configuration, transmitting the second message, or receiving the acknowledgement. In cases where the RAN determines to retain the SDT configuration, the RAN node can restart the CG-SDT timer in response to or after determining to retain the SDT configuration, transmitting the second message, or receiving the acknowledgement.

In some implementations, the SDT configuration can include a DRB list, a SRB2 indication, a DRB ROHC continue indication, and/or a data volume threshold for SDT. The DRB list includes one or more DRB identities indicating one or more DRBs qualifying for SDT. The SRB2 indication indicates that a SRB2 qualifies for SDT. The DRB ROHC continue indication indicates that ROHC protocol continues for the one or more DRBs when the UE initiates SDT. The data volume threshold specifies a data volume that the UE uses to determine whether SDT can be initiated.

In some implementations, the RAN node determines to release the SDT configuration in cases where no DRB qualifies for SDT. For example, the RAN node may release the one or more DRBs for the UE at block 604. In other implementations, the RAN node determines to release the SDT configuration in cases where the RAN node has no sufficient resources for SDT (e.g., CG-SDT). In still other implementations, the RAN node determines to release the SDT configuration in cases where the RAN node is congested.

In cases where the RAN node supports delta configurations, the RAN node may not include a SDT configuration in the third message. In cases where the RAN node does not support delta configurations, the RAN node may include the SDT configuration in the third message.

In cases where the RAN node is a CU, the CU can obtain the CG-SDT configuration from the DU (e.g., events 328, 330, 428, 430). To obtain the CG-SDT configuration, the CU can transmit a CU-to-DU message to the DU (e.g., events 328, 428). The CU-to-DU message can include an indication (e.g., CG-SDT Query Indication IE) requesting a CG-SDT configuration. In response, the DU transmits a DU-to-CU message including the CG-SDT configuration (e.g., events 330, 430). The DU can start the CG-SDT timer instead of the CU in response to or after receiving the CU-to-DU message or transmitting the DU-to-CU message. Alternatively, the DU can start the CG-SDT timer upon receiving a CU-to-DU message including the first message from the CU (e.g. events 332, 432). The DU can stop the CG-SDT timer upon receiving a CU-to-DU message including the second message from the CU (e.g., events 332, 432). The DU can restart the CG-SDT timer upon receiving a CU-to-DU message including the third message from the CU (e.g., events 332, 432). The CU transmits the first message to the UE via a DU at block 602. The CU communicates data with the UE via the DU at block 604. The CU transmits the second message to the UE via the DU at block 610. The CU transmits the third message to the UE via the DU at block 612.

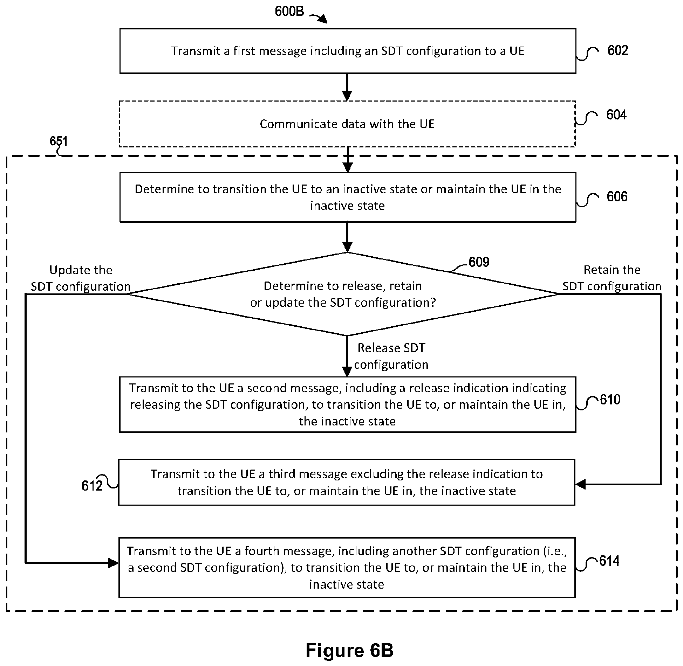

Fig. 6B is a flow diagram of an example method 600B, similar to the method 600A, except that method 600B includes blocks 609 and 614 instead of block 608. At block 609, the RAN node determines whether to release, retain, or update the SDT configuration. The flow proceeds to block 610, 612, or 614 when the RAN node determines to release, retain, or update the SDT configuration, respectively. At block 614, the RAN node transmits to the UE a fourth message including another SDT configuration (i.e., a second SDT configuration) to transition the UE to, or maintain the UE in, the inactive state (see e.g., events 432, 434, 394, 494, 495, 594, 595). The blocks 606, 609, 610, 612 and 614 are collectively referred to in Fig. 6B as block 651.

In some implementations, the second SDT configuration can include a DRB list, an SRB2 indication, a DRB ROHC continue indication, and/or a data volume threshold for SDT. The DRB list includes one or more DRB identities indicating one or more DRBs qualifying for SDT. The SRB2 indication indicates that an SRB2 qualifies for SDT. The DRB ROHC continue indication indicates that ROHC protocol continues for the one or more DRBs when the UE initiates SDT. The data volume threshold specifies a data volume that the UE uses to determine whether SDT can be initiated.

In some implementations, the RAN node determines to update the SDT configuration in cases where the RAN node releases one or more of the DRB(s) qualifying for SDT. For example, the RAN node releases the one or more DRBs for the UE at block 604. In other implementations, the RAN node determines to update the SDT configuration because the RAN node determines that one or some of the DRB(s) no longer qualify for SDT. In yet other implementations, the RAN node determines to update the SDT configuration because the RAN node determines that additional DRB(s) qualify for SDT. For example, the RAN node may configure the additional DRB(s) for the UE at block 604.

In some implementations, the fourth message is an RRC release message (e.g., *RRCRelease* message). In cases where the RAN node is a CU, the CU transmits the fourth message to the UE via the DU at block 614.

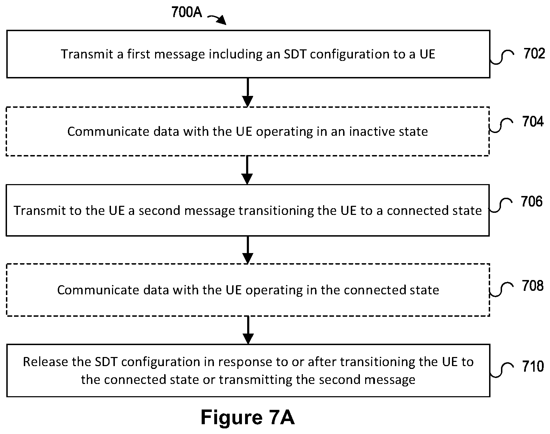

Fig. 7A illustrates a method 700A, which can be implemented by a RAN node (e.g., the base station 104, the CU 172, the CU-CP 172A, or the DU 174) for managing an SDT configuration for a UE (e.g., the UE 102).

The method 700A begins at block 702, where the RAN node transmits a first message including an SDT configuration to a UE (e.g., events 332, 334, 432, 434, 394, 494, 495, 594, 595). At block 704 (optional), the RAN node can communicate data with the UE operating in an inactive state (e.g., events 404, 406, 415, 416, 418, 492, 592). At block 706, the RAN node transmits to the UE a second message transitioning the UE to a connected state (e.g., events 432, 434, 394, 494, 495, 594, 595). At block 708 (optional), the RAN node can communicate data with the UE operating in the connected state (e.g., events 404, 406, 415, 416, 418, 492, 592). At block 710, the RAN node releases the SDT configuration in response to or after transitioning the UE to the connected state or transmitting the second message. The implementation of Fig. 7A advantageously removes the need for the RAN to maintain the SDT configuration when the UE is no longer in the inactive state.

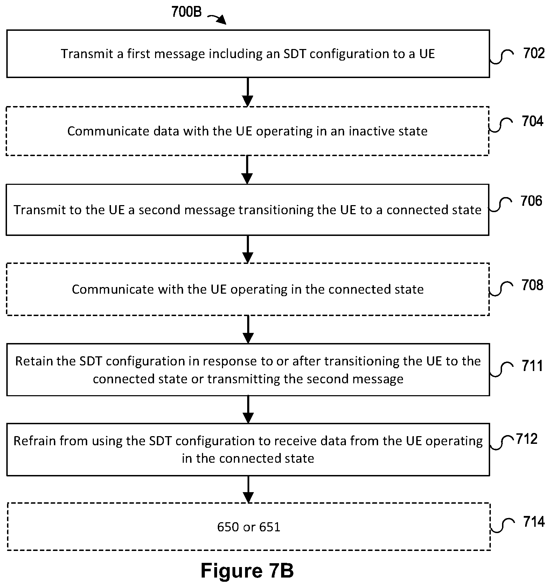

Fig. 7B is a flow diagram of an example method 700B, which is similar to the method 700A except that the method 700B includes blocks 711, 712, and 714 (optional) instead of block 710. At block 711, the RAN node retains the SDT configuration in response to or after transitioning the UE to the connected state or transmitting the second message. At block 712, the RAN node refrains from (e.g., suspends or stops) using the SDT configuration to receive data from the UE operating in the connected state. At block 714, the flow proceeds to block 650 of Fig. 6A or block 651 of Fig. 6B. The implementation of Fig. 7B can, for example, advantageously allow for the RAN node to use a delta SDT configuration when the UE subsequently transitions to the inactive state.

In some implementations, the DU can retain the CG-SDT configuration in response to the CU-to-DU message. In some implementations, the CU does not indicate releasing the CG-SDT configuration in the CU-to-DU message. In some implementations, the CU can include an indication indicating that the DU is to retain the CG-SDT configuration, and the DU can retain the CG-SDT configuration in response to the indication. In other implementations, the DU can retain the CG-SDT configuration in response to the CU-to-DU message excluding the second indication. In yet other implementations, the DU can retain the CG-SDT configuration in response to the third indication.

In some implementations, the RAN node maintains (i.e., keeps) the CG-SDT timer running in response to or after transitioning the UE to the connected state and/or transmitting the second message. In some implementations, the RAN node restarts the CG-SDT timer upon transmitting a timing advance command to the UE at blocks 704, 708. For example, the RAN node may transmit a MAC PDU including the timing advance command to the UE during a SDT session at blocks 704, 708.

In some implementations, the RAN node (e.g., a first RAN node) can determine to hand over the UE to a second RAN node (e.g., the base station 106, a DU, or a CU) after transitioning the UE to the connected state. In such cases, the first RAN node can transmit a first interface message including handover preparation information to the second RAN node. In response, the second RAN node can transmit a second interface message including a handover command message (e.g., an RRC reconfiguration message) to the first RAN node. In some implementations, the first RAN node can include the SDT configuration in the first interface message or the handover preparation information.

In other implementations, the first RAN node refrains from including the SDT configuration in the first interface message or the handover preparation information. In some implementations, the second RAN node can discard the SDT configuration, in cases where the second RAN node does not support delta configurations. In cases where the second RAN node supports delta configurations, the second RAN node can take the SDT configuration (e.g., a first SDT configuration) into account when the second RAN node determines to transition the UE to the inactive state after the UE hands over to the second RAN node. For example, after the UE hands over to the second RAN node, the second RAN node can generate a second SDT configuration augmenting the SDT configuration, and transmit an RRC release message including the second SDT configuration to the UE to transition the UE to the inactive state.

In some implementations, the first and second interface messages can be a *Handover Request* message and a *Handover Request Acknowledge* message, respectively. In other implementations, the first and second interface messages can be a *UE Context Setup Request* message and a *UE Context Setup Response* message, respectively.

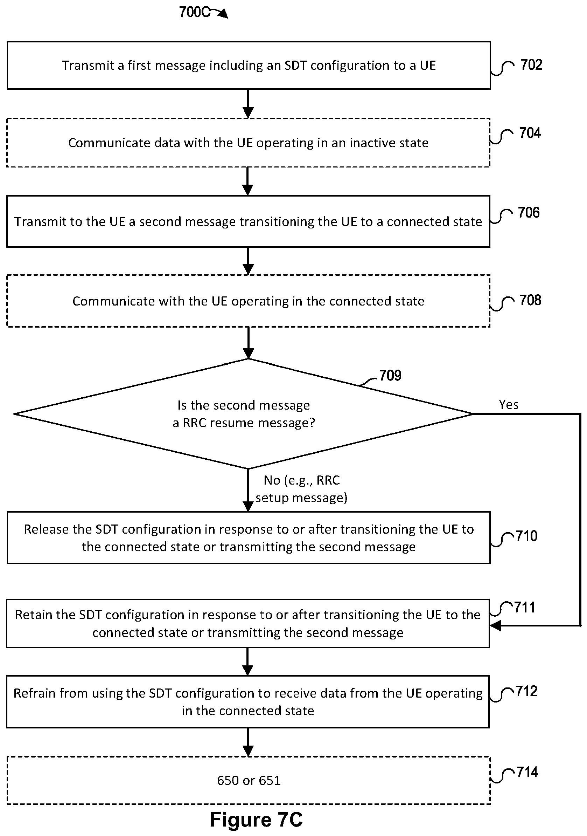

Fig. 7C is a flow diagram of an example method 700C, which is similar to the methods 700A and 700B except that at block 709, the RAN node determines whether the second message is an RRC resume message. If the RAN node determines that the second message is not an RRC resume message (e.g., if the second message is an RRC setup message), the flow proceeds to block 710. Otherwise, if the RAN node determines that the second message is an RRC resume message, the flow proceeds to blocks 711, 712, and 714 (optional).

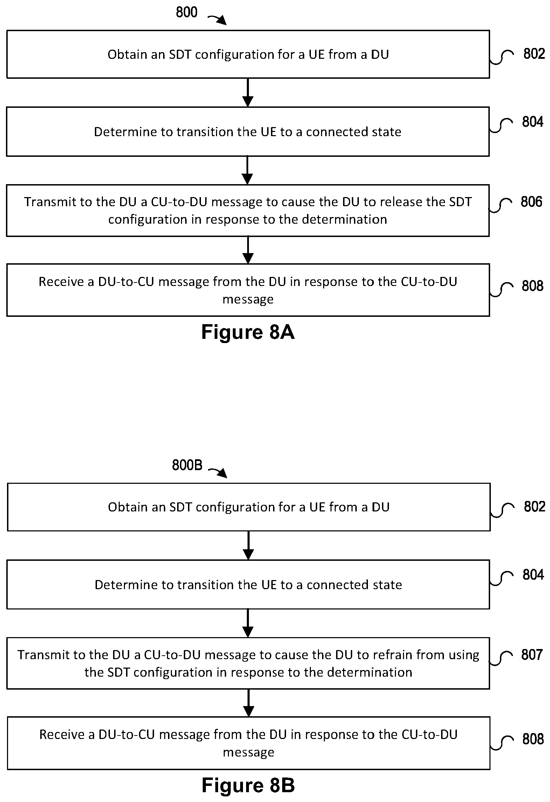

Fig. 8A illustrates a method 800A, which can be implemented/performed by a CU (e.g., the CU 172 or the CU-CP 172A), to manage an SDT configuration for a UE (e.g., the UE 102).

The method 800A begins at block 802, where the CU obtains an SDT configuration for a UE from a DU (e.g., events 328, 330, 428, 430, 394, 494, 495, 594, 595). At block 804, the CU determines to transition the UE to a connected state. At block 806, the CU transmits to the DU a CU-to-DU message to cause the DU to release the SDT configuration in response to the determination (e.g., events 506, 510). At block 808, the CU receives a DU-to-CU message from the DU in response to the CU-to-DU message (e.g., event 508). In some implementations, the SDT configuration can be a CG-SDT configuration or an SDT DU configuration described above.

In some implementations, the SDT configuration can be the CG-SDT configuration(s) or SDT DU configuration described above. In some implementations, the CU can include an indication in the CU-to-DU message to indicate that the DU is to release the SDT configuration. In other implementations, the CU does not include an indication indicating that the DU is to release the SDT configuration in the CU-to-DU message. In such cases, the DU can release the SDT configuration in accordance with a predefined rule, e.g., as specified in a 3GPP specification such as 3GPP specification 38.473.

Fig. 8B is a flow diagram of an example method 800B, which is similar to the method 800A except that the method 800B includes block 807 instead of block 806. At block 807, the CU transmits to the DU a CU-to-DU message to cause the DU to refrain from (e.g., suspend or stop) using the SDT configuration in response to the determination (e.g., events 506, 510).

In some implementations, the CU can include an indication in the CU-to-DU message to indicate that the DU is to suspend the SDT configuration. In other implementations, the CU does not include an indication indicating that the DU is to refrain from using the SDT configuration in the CU-to-DU message. In such cases, the DU can refrain from using the SDT configuration in accordance with a predefined rule, e.g., as specified in a 3GPP specification such as 3GPP specification 38.473.

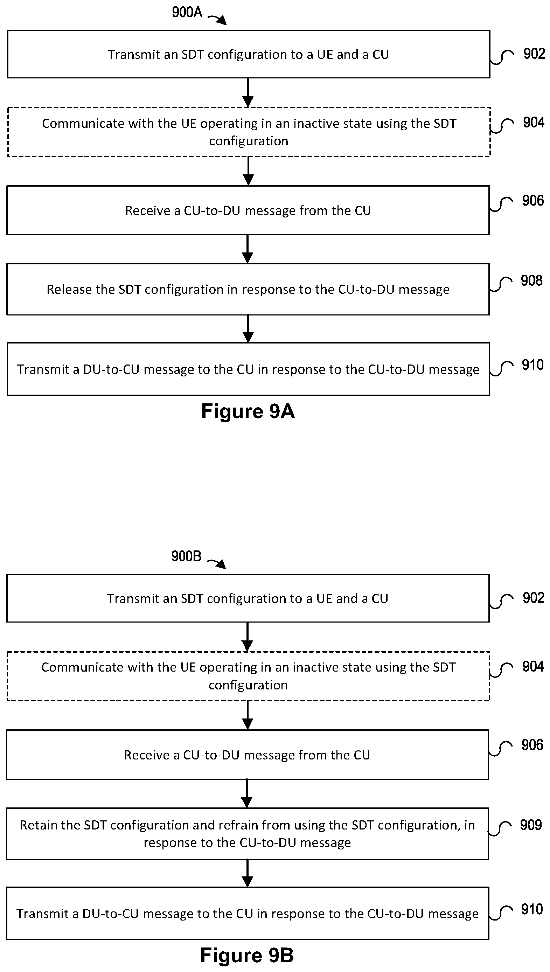

Fig. 9A illustrates a method 900A, which can be implemented/performed by a DU (e.g., the DU 174) to manage uplink synchronization for a UE (e.g., the UE 102).

The method 900A begins at block 902, where the DU transmits an SDT configuration to a UE and a CU (e.g., events 330, 332, 334, 430, 432, 434, 394, 494, 495, 594, 595). At block 904, the DU communicates with the UE operating in an inactive state using the SDT configuration (e.g., events 404, 418, 420, 592, 503, 512, 542). At block 906, the DU receives a CU-to-DU message from the CU (e.g., events 506, 510). At block 908, the DU releases the SDT configuration in response to the CU-to-DU message. At block 910, the DU transmits a DU-to-CU message to the CU in response to the CU-to-DU message (e.g., event 508).

In some implementations, the SDT configuration can be the CG-SDT configuration(s) or SDT DU configuration described above. In some implementations, the CU-to-DU message can be the CU-to-DU message of block 806.

Fig. 9B is a flow diagram of an example method 900B, similar to the method 900A, except that the method 900B includes block 909 instead of block 908. At block 909, the DU retains the SDT configuration and refrains from using the SDT configuration, in response to the CU-to-DU message. In some implementations, the CU-to-DU message can be the CU-to-DU message of block 807.

Examples and implementations for the method 700A can apply to the methods 800A, 800B, 900A, and 900B.

The following description may be applied to the description above.

Generally speaking, description for one of the above figures can apply to another figure of the above figures. In some implementations, "message" is used and can be replaced by "information element (IE)", and vice versa. In some implementations, "IE" is used and can be replaced by "field", and vice versa. In some implementations, "configuration" can be replaced by "configurations" or "configuration parameters", and vice versa. In some implementations, "small data transmission" can be replaced by "early data transmission (EDT)" and "SDT" can be replaced by "EDT", and vice versa. In some implementations, "small data transmission" can be replaced by "small data communication", and vice versa. In some implementations, "stop" can be replaced by "suspend".

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC), a digital signal processor (DSP), etc.) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method, performed by a radio access network, RAN, node, of managing configuration information for small data transmission, SDT, operation, the method comprising:
transmitting to a user equipment, UE, (102) a first radio resource control, RRC, release message while the UE is in an RRC connected state, the first RRC release message including an SDT configuration for use by the UE when the UE operates in an RRC inactive state; **characterized in that**
after transmitting the first RRC release message, and while the UE is in the RRC inactive state:
when it is determined to release the SDT configuration, transmitting to the UE a second RRC release message including a release indication for indicating that the UE is to release the SDT configuration, and
when it is determined not to release the SDT configuration, transmitting to the UE a third RRC release message excluding the release indication.

2. The method of claim 1, wherein the release indication is in a field of the second RRC release message.

3. The method of claim 1 or 2, further comprising:
determining to release the SDT configuration in response to:
no data radio bearer, DRB, qualifying for SDT;
the RAN node not having sufficient resources for SDT; or
the RAN node being congested.

4. The method of any one of claims 1-3, further comprising:
after transmitting the first RRC release message and before transmitting the second RRC release message, communicating data with the UE (102) using the SDT configuration while the UE is in the inactive state.

5. The method of any one of claims 1-4, wherein the RAN node is a central unit, CU, (172) of a distributed base station (104, 106, 170), wherein transmitting the first RRC release message, transmitting the second RRC release message, and communicating data with the UE (102) occur via a distributed unit, DU, (174) of the distributed base station, and wherein the method further comprises:
before transmitting the first RRC release message, obtaining the SDT configuration from the DU.

6. The method of claim 5, further comprising:
before communicating data with the UE (102), starting a configured grant SDT, CG-SDT, time alignment timer; and
in response to a determination to release the SDT configuration, stopping the CG-SDT time alignment timer.

7. The method of any one of claims 1-4, wherein the RAN node is a distributed base station (104, 106, 170) including a central unit, CU, (172) and a distributed unit, DU, (174) and wherein the method further comprises:
before transmitting the first RRC release message, transmitting the SDT configuration from the DU to the CU.

8. The method of claim 7, further comprising:
before communicating data with the UE, starting a configured grant SDT, CG-SDT, time alignment timer at the DU (174); and
in response to a determination to release the SDT configuration, stopping the CG-SDT time alignment timer at the DU.

9. A method, performed by a radio access network, RAN, node, of managing configuration information for small data transmission, SDT, operation, the method comprising:
transmitting to a user equipment, UE, (102) while the UE is in a radio resource control RRC connected state, a first message including an SDT configuration for use by the UE when the UE operates in an RRC inactive state; **characterized in that**
after transmitting the first message, and while the UE is in the RRC inactive state, transitioning the UE to the RRC connected state by transmitting a second message to the UE; and
after transitioning the UE to the RRC connected state, releasing the SDT configuration or causing an other RAN node to release the SDT configuration.

10. The method of claim 9, wherein the first message is a radio resource control, RRC, release message.

11. The method of claim 9 or 10, further comprising:
before transitioning the UE (102) to the RRC connected state, starting a configured grant SDT, CG-SDT, time alignment timer; and
after transitioning the UE to the RRC connected state, keeping the CG-SDT timer running.

12. The method of any one of claims 9-11, wherein:
the RAN node is a central unit, CU, (172) of a distributed base station (104, 106, 170) and the other RAN node is a distributed unit, DU, (174) of the distributed base station;
transmitting the first message and transmitting the second message occur via the DU;
the method further comprises determining to transition the UE (102) to the RRC connected state;
transitioning the UE to the RRC connected state is in response to the determining; and
the method comprises, in response to the determining, causing the DU to release the SDT configuration by transmitting a CU-to-DU message to the DU.

13. The method of any one of claims 9-12, wherein:
the RAN node is a distributed unit, DU, (174) of a distributed base station (104, 106, 170);
the method further comprises receiving from a central unit, CU, (172) of the distributed base station a CU-to-DU message; and
the method comprises releasing the SDT configuration in response to the CU-to-DU message.

14. A radio access network, RAN, node comprising one or more processors and configured to perform the method of any one of claims 1-13.

## Patentansprüche

1. Verfahren zur Verwaltung von Konfigurationsinformationen für den Betrieb kleiner Datenübertragungen (SDT - small data transmission), das von einem Funkzugangsnetz(RAN - radio access network)-Knoten durchgeführt wird, wobei das Verfahren Folgendes umfasst:
Übertragen einer ersten Funkressourcensteuerungs (RRC - radio resource control)-Freigabenachricht an eine Benutzerausrüstung (UE - user equipment) (102), während sich das UE in einem RRC-Verbindungszustand befindet, wobei die erste RRC-Freigabenachricht eine SDT-Konfiguration zur Verwendung durch das UE beinhaltet, wenn das UE in einem inaktiven RRC-Zustand arbeitet; **dadurch gekennzeichnet, dass**
nach dem Übertragen der ersten RRC-Freigabenachricht und während sich das UE im inaktiven RRC-Zustand befindet:
wenn bestimmt wird, die SDT-Konfiguration freizugeben, Übertragen einer zweiten RRC-Freigabenachricht, die eine Freigabeangabe beinhaltet, an das UE zum Angeben, dass das UE die SDT-Konfiguration freizugeben hat, und
wenn bestimmt wird, die SDT-Konfiguration nicht freizugeben, Übertragen einer dritten RRC-Freigabenachricht ohne die Freigabeangabe an das UE.

2. Verfahren nach Anspruch 1, wobei sich die Freigabeangabe in einem Feld der zweiten RRC-Freigabenachricht befindet.

3. Verfahren nach Anspruch 1 oder 2, ferner umfassend:
Bestimmen, die SDT-Konfiguration freizugeben, als Reaktion auf Folgendes:
kein Datenfunkträger (DRB - data radio bearer) kommt für SDT in Frage;
der RAN-Knoten weist keine ausreichenden Ressourcen für SDT auf; oder
der RAN-Knoten ist überlastet.

4. Verfahren nach einem der Ansprüche 1-3, ferner umfassend:
nach dem Übertragen der ersten RRC-Freigabenachricht und vor dem Übertragen der zweiten RRC-Freigabenachricht, Kommunizieren von Daten mit dem UE (102) unter Verwendung der SDT-Konfiguration, während sich das UE im inaktiven Zustand befindet.

5. Verfahren nach einem der Ansprüche 1-4, wobei der RAN-Knoten eine zentrale Einheit (CU - central unit) (172) einer verteilten Basisstation (104, 106, 170) ist, wobei das Übertragen der ersten RRC-Freigabenachricht, das Übertragen der zweiten RRC-Freigabenachricht und das Kommunizieren von Daten mit dem UE (102) über eine verteilte Einheit (DU - distributed unit) (174) der verteilten Basisstation erfolgt, und wobei das Verfahren ferner Folgendes umfasst:
vor dem Übertragen der ersten RRC-Freigabenachricht, Erhalten der SDT-Konfiguration von der DU.

6. Verfahren nach Anspruch 5, ferner umfassend:
vor dem Kommunizieren von Daten mit dem UE (102), Starten eines konfigurierten Erteilungs-SDT(CG-SDT - configured grant SDT)-Zeitabgleichtimers; und
als Reaktion auf das Bestimmen, die SDT-Konfiguration freizugeben, Stoppen des CG-SDT-Zeitabgleichtimers.

7. Verfahren nach einem der Ansprüche 1-4, wobei der RAN-Knoten eine verteilte Basisstation (104, 106, 170) ist, die eine zentrale Einheit (CU) (172) und eine verteilte Einheit (DU) (174) beinhaltet, und wobei das Verfahren ferner Folgendes umfasst:
vor dem Übertragen der ersten RRC-Freigabenachricht, Übertragen der SDT-Konfiguration von der DU an die CU.

8. Verfahren nach Anspruch 7, ferner umfassend:
vor dem Kommunizieren von Daten mit dem UE, Starten eines konfigurierten Erteilungs-SDT(CG-SDT)-Zeitabgleichtimers an der DU (174); und
als Reaktion auf das Bestimmen, die SDT-Konfiguration freizugeben, Stoppen des CG-SDT-Zeitabgleichtimers an der DU.

9. Verfahren zur Verwaltung von Konfigurationsinformationen für den Betrieb kleiner Datenübertragungen (SDT), das von einem Funkzugangsnetz(RAN)-Knoten durchgeführt wird, wobei das Verfahren Folgendes umfasst:
Übertragen einer ersten Nachricht, die eine SDT-Konfiguration zur Verwendung durch das UE beinhaltet, an eine Benutzerausrüstung (UE) (102), während sich das UE in einem Funkressourcensteuerungs(RRC)-Verbindungszustand befindet, wenn das UE in einem inaktiven RRC-Zustand arbeitet; **dadurch gekennzeichnet, dass**
nach dem Übertragen der ersten Nachricht und während sich das UE im inaktiven RRC-Zustand befindet, Überführen des UE in den RRC-Verbindungszustand durch Übertragen einer zweiten Nachricht an das UE; und
nach dem Überführen des UE in den RRC-Verbindungszustand, Freigeben der SDT-Konfiguration oder Veranlassen eines anderen RAN-Knotens, die SDT-Konfiguration freizugeben.

10. Verfahren nach Anspruch 9, wobei die erste Nachricht eine Funkressourcensteuerungs(RRC)-Freigabenachricht ist.

11. Verfahren nach Anspruch 9 oder 10, ferner umfassend:
vor dem Überführen des UE (102) in den RRC-Verbindungszustand, Starten eines konfigurierten Erteilungs-SDT(CG-SDT)-Zeitabgleichtimers; und
nach dem Überführen des UE in den RRC-Verbindungszustand, Weiterlaufenlassen des CG-SDT-Timers.

12. Verfahren nach einem der Ansprüche 9-11, wobei:
der RAN-Knoten eine zentrale Einheit (CU) (172) einer verteilten Basisstation (104, 106, 170) ist und der andere RAN-Knoten eine verteilte Einheit (DU) (174) der verteilten Basisstation ist;
das Übertragen der ersten Nachricht und das Übertragen der zweiten Nachricht über die DU erfolgt;
das Verfahren ferner Folgendes umfasst: Bestimmen, das UE (102) in den RRC-Verbindungszustand zu überführen;
Überführen des UE in den RRC-Verbindungszustand als Reaktion auf das Bestimmen; und
wobei das Verfahren als Reaktion auf das Bestimmen Veranlassen der DU, die SDT-Konfiguration freizugeben, durch Übertragen einer CU-zu-DU-Nachricht an die DU umfasst.

13. Verfahren nach einem der Ansprüche 9-12, wobei:
der RAN-Knoten eine verteilte Einheit (DU) (174) einer verteilten Basisstation (104, 106, 170) ist;
das Verfahren ferner Empfangen einer CU-zu-DU-Nachricht von einer zentralen Einheit (CU) (172) der verteilten Basisstation umfasst; und
das Verfahren Freigeben der SDT-Konfiguration als Reaktion auf die CU-zu-DU-Nachricht umfasst.

14. Funkzugangsnetz(RAN)-Knoten, der einen oder mehrere Prozessoren umfasst und dazu konfiguriert ist, das Verfahren nach einem der Ansprüche 1-13 durchzuführen.

## Revendications

1. Procédé, réalisé par un nœud de réseau d'accès radio, RAN, de gestion d'informations de configuration pour une opération de transmission de petites données, SDT, le procédé comprenant :
la transmission à un équipement utilisateur, UE, (102) d'un premier message de libération de commande de ressources radio, RRC, pendant que l'UE est dans un état connecté RRC, le premier message de libération RRC comportant une configuration SDT destinée à être utilisée par l'UE lorsque l'UE fonctionne dans un état inactif RRC ; **caractérisé en ce que**
après la transmission du premier message de libération RRC, et pendant que l'UE est dans l'état inactif RRC :
lorsqu'il est déterminé de libérer la configuration SDT, la transmission, à l'UE, d'un deuxième message de libération RRC comportant une indication de libération destinée à indiquer que l'UE doit libérer la configuration SDT, et
lorsqu'il est déterminé de ne pas libérer la configuration SDT, la transmission, à l'UE, d'un troisième message de libération RRC excluant l'indication de libération.

2. Procédé selon la revendication 1, dans lequel l'indication de libération se trouve dans un champ du deuxième message de libération RRC.

3. Procédé selon la revendication 1 ou 2, comprenant en outre :
la détermination de libérer la configuration SDT en réponse au fait :
qu'aucun support radio de données, DRB, n'est qualifié pour une SDT ;
que le nœud RAN n'a pas suffisamment de ressources pour une SDT ; ou
que le nœud RAN est congestionné.

4. Procédé selon l'une quelconque des revendications 1 à 3, comprenant en outre :
après la transmission du premier message de libération RRC et avant la transmission du deuxième message de libération RRC, la communication de données avec l'UE (102) à l'aide de la configuration SDT pendant que l'UE est dans l'état inactif.

5. Procédé selon l'une quelconque des revendications 1 à 4, dans lequel le nœud RAN est une unité centrale, CU, (172) d'une station de base distribuée (104, 106, 170), dans lequel la transmission du premier message de libération RRC, la transmission du deuxième message de libération RRC et la communication de données avec l'UE (102) s'effectuent via une unité distribuée, DU, (174) de la station de base distribuée, et dans lequel le procédé comprend en outre :
avant la transmission du premier message de libération RRC, l'obtention de la configuration SDT à partir de la DU.

6. Procédé selon la revendication 5, comprenant en outre :
avant la communication de données avec l'UE (102), le démarrage d'un temporisateur d'alignement temporel de SDT à autorisation configurée, CG-SDT ; et
en réponse à une détermination de libérer la configuration SDT, l'arrêt du temporisateur d'alignement temporel CG-SDT.

7. Procédé selon l'une quelconque des revendications 1 à 4, dans lequel le nœud RAN est une station de base distribuée (104, 106, 170) comportant une unité centrale, CU, (172) et une unité distribuée, DU, (174), et dans lequel le procédé comprend en outre :
avant la transmission du premier message de libération RRC, la transmission de la configuration SDT de la DU vers la CU.

8. Procédé selon la revendication 7, comprenant en outre :
avant la communication de données avec l'UE, le démarrage d'un temporisateur d'alignement temporel de SDT à autorisation configurée, CG-SDT au niveau de la DU (174) ; et
en réponse à une détermination de libérer la configuration SDT, l'arrêt du temporisateur d'alignement temporel CG-SDT au niveau de la DU.

9. Procédé, réalisé par un nœud de réseau d'accès radio, RAN, de gestion d'informations de configuration pour une opération de transmission de petites données, SDT, le procédé comprenant :
la transmission à un équipement utilisateur, UE, (102) pendant que l'UE est dans un état connecté de commande de ressources radio, RRC, d'un premier message comportant une configuration SDT destinée à être utilisée par l'UE lorsque l'UE fonctionne dans un état inactif RRC ; **caractérisé en ce que**
après la transmission du premier message, et pendant que l'UE est dans l'état inactif RRC, le fait de faire passer l'UE à l'état connecté RRC en transmettant un second message à l'UE ; et
après avoir fait passer l'UE à l'état connecté RRC, la libération de la configuration SDT ou le fait d'amener un autre nœud RAN à libérer la configuration SDT.

10. Procédé selon la revendication 9, dans lequel le premier message est un message de libération de commande de ressources radio, RRC.

11. Procédé selon la revendication 9 ou 10, comprenant en outre :
avant de faire passer l'UE (102) à l'état connecté RRC, le démarrage d'un temporisateur d'alignement temporel de SDT à autorisation configurée, CG-SDT ; et
après avoir fait passer l'UE à l'état connecté RRC, le fait de maintenir en marche le temporisateur CG-SDT.

12. Procédé selon l'une quelconque des revendications 9 à 11, dans lequel :
le nœud RAN est une unité centrale, CU, (172) d'une station de base distribuée (104, 106, 170) et l'autre nœud RAN est une unité distribuée, DU, (174) de la station de base distribuée ;
la transmission du premier message et la transmission du second message s'effectuent via la DU ;
le procédé comprend en outre la détermination du fait de faire passer l'UE (102) à l'état connecté RRC ;
le fait de faire passer l'UE à l'état connecté RRC est effectué en réponse à la détermination ; et
le procédé comprend, en réponse à la détermination, le fait d'amener la DU à libérer la configuration SDT en transmettant un message CU-à-DU à la DU.

13. Procédé selon l'une quelconque des revendications 9 à 12, dans lequel :
le nœud RAN est une unité distribuée, DU, (174) d'une station de base distribuée (104, 106, 170) ;
le procédé comprend en outre la réception, en provenance d'une unité centrale, CU, (172) de la station de base distribuée, d'un message CU-à-DU ; et
le procédé comprend la libération de la configuration SDT en réponse au message CU-à-DU.

14. Nœud de réseau d'accès radio, RAN, comprenant un ou plusieurs processeurs et configuré pour réaliser le procédé selon l'une quelconque des revendications 1 à 13.
